(19) Europäisches Patentamt
European Patent Office
Office européen des brevets

(11) **EP 2 901 110 B1**

(12) **EUROPÄISCHE PATENTSCHRIFT**

(45) Veröffentlichungstag und Bekanntmachung des Hinweises auf die Patenterteilung:
**30.09.2020 Patentblatt 2020/40**

(21) Anmeldenummer: **13753855.9**

(22) Anmeldetag: **28.08.2013**

(51) Int Cl.:
**G01F 23/284** $^{(2006.01)}$     **G01F 22/00** $^{(2006.01)}$

(86) Internationale Anmeldenummer:
**PCT/EP2013/067789**

(87) Internationale Veröffentlichungsnummer:
**WO 2014/048663 (03.04.2014 Gazette 2014/14)**

(54) **FÜLLSTANDSMESSGERÄT**

FILL LEVEL MEASUREMENT DEVICE

APPAREIL DE MESURE DE NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2012 DE 102012109101**

(43) Veröffentlichungstag der Anmeldung:
**05.08.2015 Patentblatt 2015/32**

(73) Patentinhaber: **Endress+Hauser SE+Co. KG**
**79689 Maulburg (DE)**

(72) Erfinder: **BLÖDT, Thomas**
**79689 Maulburg (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**EP-A1- 2 128 576      WO-A1-2004/057366**
**DE-A1-102010 014 457  US-A1- 2004 108 951**
**US-A1- 2010 031 753**

## Beschreibung

Die Erfindung betrifft ein nach dem Pulsradarprinzip arbeitendes Füllstandsmessgerät zur Messung eines Füllstands eines Füllguts in einem Behälter, mit einer Sendeeinrichtung mit einer an eine Steuerung angeschlossenen Pulserzeugungseinrichtung, die derart ausgebildet ist, dass sie für jede Messung ein aus Mikrowellenpulsen einer vorgegebenen Mittenfrequenz bestehendes Sendesignal erzeugt, einer an die Sendeeinrichtung angeschlossenen Antenne, die die Sendesignale in den Behälter sendet, und deren im Behälter in Richtung der Antenne zurück reflektierten Signalanteile nach einer von der Entfernung des zugehörigen Reflektors vom Füllstandsmessgerät abhängigen Laufzeit als Empfangssignale empfängt, und einer an die Sendeeinrichtung und die Antenne angeschlossenen Signalverarbeitungseinrichtung, die die Empfangssignale auswertet.

Derartige berührungslos nach dem Pulsradarprinzip arbeitende Füllstandsmessgeräte werden in einer Vielzahl von Industriezweigen, insb. in der verarbeitenden Industrie, in der Chemie oder in der Lebensmittelindustrie, eingesetzt.

Herkömmliche Pulsradar-Füllstandsmessgeräte weisen regelmäßig eine Sendeeinrichtung mit einer an eine Steuerung angeschlossenen Pulserzeugungseinrichtung auf, die derart ausgebildet ist, dass sie für jede Messung ein aus mit einer vorgegebenen Pulswiederhohlrate erzeugten Mikrowellenpulsen einer fest vorgegebenen in allen Messungen gleichen Mittenfrequenz bestehendes Sendesignal erzeugt. Die Mikrowellenimpulse weisen beispielsweise fest vorgegebene Mittenfrequenzen von 26 GHz oder 78 GHz auf. Die Antenne ist oberhalb des höchsten zu messenden Füllstands am Behälter montiert, in Richtung des Füllguts ausgerichtet, und sendet die Sendesignale in den Behälter. Nachfolgend empfängt sie deren an im Behälter befindlichen Reflektoren in Richtung des Füllstandsmessgeräts zurück reflektierten Signalanteile nach einer von der Entfernung des jeweiligen Reflektors abhängigen Laufzeit als Empfangssignale. Letztere werden einer an die Sendeeinrichtung und die Antenne angeschlossenen Signalverarbeitungseinrichtung zugeführt, die anhand der Empfangssignale den Füllstand bestimmt.

Dabei werden regelmäßig Messkurven abgeleitet, die die Amplituden der Empfangssignale als Funktion von deren für den Weg zum zugehörigen Reflektor und zurück benötigten Laufzeit wiedergeben. Aus den Laufzeiten der Maxima dieser Messkurven kann nun anhand der Ausbreitungsgeschwindigkeit der Mikrowellenpulse die Entfernung des zugehörigen Reflektors vom Füllstandsmessgerät bestimmt werden.

Zur Füllstandsmessung werden heute eine Vielzahl unterschiedlicher häufig als Echoerkennungsverfahren bezeichnete Auswertungsverfahren eingesetzt, mit denen anhand der Messkurven das jeweils darin enthaltene auf die Reflektion an der Füllgutoberfläche zurückzuführende Maximum ermittelt wird. Dabei kann beispielsweise das erste auftretende Maximum oder das die größte Maximalamplitude aufweisende Maximum als das gesuchte auf die Reflektion an der Füllgutoberfläche zurückzuführende Maximum der jeweiligen Messkurve bestimmt werden. Aus der Laufzeit dieses Maximums wird anhand der Ausbreitungsgeschwindigkeit der Mikrowellenpulse die Entfernung der Füllgutoberfläche vom Füllstandsmessgerät abgeleitet, die dann anhand der Einbauhöhe der Antenne in den Füllstand - also die Füllhöhe des Füllguts im Behälter - umrechenbar ist. Diese Füllstandsmessgeräte liefern in einer Vielzahl unterschiedlicher Anwendungen zuverlässige Messergebnisse.

Zur Füllstandsmessung von Schüttgütern sind sie jedoch in der Regel nicht optimal geeignet, da Schüttgüter regelmäßig berg- oder talförmige Schüttkegel ausbilden, deren Oberflächenprofil mit diesen Füllstandsmessgeräten nicht erfasst und somit bei der Füllstandsbestimmung nicht berücksichtigt werden kann. Ein Beispiel für eine solche Vorrichtung ist im Patentdokument EP 2 128 576 A1 angegeben.

In diesen Anwendungen werden daher heute deutlich aufwendigere abbildende Radarmesssysteme eingesetzt, mit denen ein Oberflächenprofil der Füllgutoberfläche aufgezeichnet werden kann. Abbildende Radarsysteme benötigen jedoch ein Antennensystem aus mehreren räumlich benachbart zueinander angeordneten Antennen, die über eine elektrische Steuerung miteinander verbunden sind, und je nach Ausgestaltung entsprechend einem vorgegebenen zeitlichen Ablauf als Sendeantenne, als Empfangsantenne oder als Sende- und Empfangsantenne dienen. Dabei werden die Strahlenpfade der Sende- und Empfangssignale durch die schaltungstechnisch bewirkte Aktivierung unterschiedlicher Antennen als Sende- bzw. Empfangsantenne derart variiert, dass anhand der auf unterschiedlichen Strahlenpfaden gemessenen Signallaufzeiten von auf Reflektionen an der Füllgutoberfläche zurückzuführenden Maxima der Empfangssignale in Verbindung mit den Positionen der jeweils verwendeten Sende- und Empfangsantennen ein Profil der Füllgutoberfläche errechnet werden kann.

Alternativ können räumliche Profile von Füllgutoberflächen mit Füllstandsmessgeräten aufgezeichnet werden, die eine einzige Antenne aufweisen, die mechanisch schwenkbar über dem Füllgut angeordnet wird. Auch hierüber kann durch sukzessive ausgeführte Messungen bei jeweils veränderter Antennenausrichtung ein Oberflächenprofil der Füllgutüberfläche ermittelt werden. Mechanisch schwenkbare Antennen sind jedoch deutlich aufwendiger in der Herstellung, mechanisch anfällig und wartungsintensiv. Eine weitere Alternative besteht darin, mehrere unabhängig voneinander betriebene Füllstandsmessgeräte nebeneinander einzusetzen, deren Messergebnisse zusammen mit deren jeweiliger Position zur Ableitung eines Oberflächenprofils herangezogen werden.

Ebenfalls unter Umständen problematisch ist der Einsatz herkömmlicher Füllstandsmessgeräte mit einer einzigen starr montierten Antenne in Anwendungen, in denen im Behälter seitlich in den Strahlengang der Sendesignale hineinragende nachfolgend als Störer bezeichnete Einbauten, wie z.B. weitere Messgeräte oder Befüllstutzen, vorhanden sind.

Eine zuverlässige Messung ist hier nur dann möglich, wenn es gelingt, die von der Füllgutoberfläche erzeugten Maxima der Messkurven zu identifizieren. Hierzu ist es regelmäßig erforderlich, die vom Störer erzeugten Maxima der Messkurven zuverlässig von den von der Füllgutoberfläche erzeugten Maxima zu unterscheiden.

Ist die Position des Störers vorbekannt, so kann dies beispielsweise dadurch geschehen, dass der zugehörige Laufzeitbereich in den Messkurven ausgeblendet wird. Alternativ können in diesem Bereich nur auftretende Messkurvenamplituden berücksichtigt werden, die einen vorgegebenen Schwellwert übersteigen. Diese nachfolgend als Störechoausblendungsverfahren bezeichneten Verfahren setzen jedoch voraus, dass die Position des Störers vorbekannt oder auf andere Weise zuverlässig ermittelt werden kann.

Alternativ oder zusätzlich hierzu werden heute regelmäßig sogenannte Echoverfolgungsverfahren eingesetzt, bei denen in aufeinanderfolgenden Messungen Messkurven aufgezeichnet werden, und anhand dieser Messkurven die zeitliche Entwicklung der Laufzeiten von bestimmten Reflektoren, insb. der Füllgutoberfläche, dem Behälterboden oder dem Störer, zugeordneten Maxima der Messkurven ermittelt wird. Anhand der Echoverfolgung können dann Prognosen für die zu erwartenden Laufzeiten der auf einen bestimmten Reflektor zurückzuführenden Maxima der Messkurven aufgestellt werden, die nachfolgend zur Verbesserung der Zuverlässigkeit oder zur Überprüfung der Zuordnung der dann tatsächlich in der nächsten Messkurve festgestellten Maxima zu den jeweiligen Reflektoren eingesetzt werden. Dabei muss jedoch auch hier anfänglich zumindest einmal eine zuverlässige Zuordnung der Maxima zu den zugehörigen Reflektoren vorgegeben oder anderweitig ermittelt werden, bevor deren zeitliche Entwicklung verfolgt bzw. deren zukünftige Entwicklung prognostiziert werden kann.

Es ist eine Aufgabe der Erfindung ein mechanisch einfach und robust aufgebautes nach dem Pulsradarprinzip arbeitendes Füllstandsmessgerät anzugeben, dass in einer Vielzahl verschiedener Anwendungen, insb. auch in Anwendungen mit schüttgutförmigen Füllgütern und/oder seitlich in den Behälter hineinragenden Störern, zuverlässig einsetzbar ist.

Zur Lösung dieser Aufgabe umfasst die Erfindung ein nach dem Pulsradarprinzip arbeitendes Füllstandsmessgerät zur Messung eines Füllstands eines Füllguts in einem Behälter, mit

- einer Sendeeinrichtung mit einer an eine Steuerung angeschlossenen Pulserzeugungseinrichtung,

-- die derart ausgebildet ist, dass sie gemäß vorgegebenen jeweils mindestens zwei Messungen umfassenden Messzyklen für jede Messung ein aus Mikrowellenpulsen einer für die jeweilige Messung vorgegebenen Mittenfrequenz bestehendes Sendesignal erzeugt, wobei die Mittenfrequenzen der Sendesignale von mindestens zwei der Messungen voneinander verschieden sind,

- einer an die Sendeeinrichtung angeschlossenen Antenne,

-- die die Sendesignale in den Behälter sendet, und deren im Behälter in Richtung der Antenne zurück reflektierten Signalanteile nach einer von der Entfernung des zugehörigen Reflektors vom Füllstandsmessgerät abhängigen Laufzeit als Empfangssignale empfängt, und

-- die eine von der Mittenfrequenz der Sendesignale abhängige für unterschiedliche Mittenfrequenzen verschiedene räumliche Abstrahlcharakteristik aufweist,

-- die eine Hohlleiter-Schlitzantenne ist, die derart ausgestaltet ist, dass die Abstrahlcharakteristik zwei dominante Hauptkeulen aufweist, deren räumliche Ausrichtung von der Mittenfrequenz ($f_n$) des jeweils gesendeten Sendesignals ($S_n$) abhängig und für unterschiedliche Mittenfrequenzen ($f_n$) verschieden ist, und

- einer an die Sendeeinrichtung und die Antenne angeschlossenen Signalverarbeitungseinrichtung,

-- die die Empfangssignale empfängt und anhand der Mittenfrequenzen der Mikrowellenpulse der zugehörigen Sendesignale und der Mittenfrequenzabhängigkeit der räumlichen Abstrahlcharakteristik der Antenne auswertet.

Gemäß einer Alternative zur Erfindung ist die Antenne eine Antenne, die eine Abstrahlcharakteristik aufweist, die eine in eine Hauptsenderichtung weisende Hauptkeule umfasst, deren Öffnungswinkel mit abnehmender Mittenfrequenz der Sendesignale ansteigt.

Gemäß einer ersten Variante der Erfindung ist die Antenne eine Hohlleiter-Schlitzantenne mit einem stabförmigen Rechteck-Hohlleiter,

- die einen von der Sendeeinrichtung gespeisten Eingang aufweist,

- deren dem Eingang gegenüberliegendes Ende endseitig kurzgeschlossen, mit einem reflexionsfreien Abschluss abgeschlossen, oder offen ist, und

- die eine Hohlleiterwand aufweist, die mit Ausnehmungen, insb. mit schlitzförmigen, schlitzähnlichen oder fraktalförmigen Ausnehmungen, versehen ist, über die die Antenne die Sendesignale mit einer von der Positionierung und Dimensionierung der Ausnehmungen und den Mittenfrequenzen der eingespeisten Sendesignale abhängigen für unterschiedliche Mittenfrequenzen verschiedenen räumlichen Abstrahlcharakteristik sendet.

Gemäß einer Ausgestaltung dieser Variante umfasst die Antenne
eine Bündelungsvorrichtung zur Bündelung der aus der Antenne austretenden Sendesignale, insb.

- ein außen auf der Hohlleiterwand angeordnetes alle Ausnehmungen umschließendes trichter- oder rechteckförmiges Hohlleitersegment,
- eine außen auf der Hohlleiterwand angeordnete Linse, insb. eine dielektrische Linse oder eine magnetische Linse,
- außen auf den Ausnehmungen aufgebrachte Platten aus einer oder mehreren planaren Lagen eines dielektrischen Materials, oder
- weitere identisch zu dem Rechteck-Hohlleiter ausgebildete Rechteck-Hohlleiter, die mit dem Rechteck-Hohlleiter zu einer Gruppe parallel amplituden- und phasengleich gespeister, und parallel zueinander und senkrecht zur Längsachse des Rechteck-Hohlleiters unmittelbar nebeneinander angeordneter Rechteck-Hohlleiter zusammengeschaltet sind.

Gemäß einer weiteren Ausgestaltung dieser Variante

- sind die Ausnehmungen derart positioniert und dimensioniert, dass die Abstrahlcharakteristik der Antenne bei mit einem reflexionsfreien Abschluss abgeschlossenem Ende eine Hauptsendekeule und bei kurzgeschlossenem oder offenem Ende zwei symmetrisch zur Flächennormalen auf die Hohlleiterwand verlaufende Hauptsendekeulen aufweist, und
- sich ein Winkel unter dem sich die Hauptsendekeulen zur Flächennormalen auf die Hohlleiterwand ausbilden mit der Mittenfrequenz der Sendesignale verändert.

Ein nach dem Pulsradarprinzip arbeitendes Füllstandsmessgeräts gemäß der zuvor beschriebenen Alternative ermöglicht ein entsprechendes Verfahren zur Messung eines Füllstands eines in einem Behälter eine planare Oberfläche ausbildenden Füllguts, bei dem

- in einem Messzyklus Messungen mit Sendesignalen verschiedener Mittenfrequenzen ausgeführt werden, bei denen jeweils

  -- ein Mikrowellenpulse einer für die jeweilige Messung vorgegebenen Mittenfrequenz aufweisendes Sendesignal gesendet,
  -- dessen zugehöriges Empfangssignal empfangen, und
  -- anhand des Empfangssignals jeweils eine Messkurve abgeleitet wird, die die Amplitude des jeweiligen Empfangssignals als Funktion der zugehörigen Signallaufzeit wiedergibt,

- für jede Messkurve Laufzeit und Maximalamplitude von Maxima der Messkurve bestimmt werden, die jeweils auf eine Reflektion an einem im Behälter befindlichen Reflektor, insb. am Füllgut, am Behälterboden oder an einem seitlich in den Strahlengang der Sendesignale hineinragenden Störer, zurückzuführen sind,
- anhand der Laufzeiten der Maxima der aufgenommenen Messkurven, die in den verschiedenen Messkurven enthaltenen Maxima bestimmt werden, die auf den gleichen Reflektor zurückzuführen sind,
- anhand der Maximalamplituden der auf den gleichen Reflektor zurückzuführenden Maxima der Messkurven und den zugehörigen Abstrahlcharakteristiken eine Information über einen Abstand abgeleitet wird, in dem sich der jeweilige Reflektor in einer senkrecht zur Hauptsenderichtung der Antenne verlaufenden Ebene von der Achse der Hauptsenderichtung befindet, wobei die auf den gleichen Reflektor zurückzuführenden Maxima bei größerem Abstand dieses Reflektors bei höheren Mittenfrequenzen eine niedrigere Maximalamplitude aufweisen, als bei niedrigeren, während bei sie geringem Abstand bei höheren Mittenfrequenzen eine größere Maximalamplitude aufweisen als bei niedrigen.

Gemäß einer Weiterbildung dieses Verfahrens wird anhand der Information über die Abstände der Reflektoren zwischen auf Reflektionen an einem seitlich in den Behälter hineinragenden Störer zurückzuführenden Maxima und auf Reflektionen an der Füllgutoberfläche oder am Behälterboden zurückzuführenden Maxima der Messkurven unterschieden.

Gemäß einer Weiterbildung der letztgenannten Weiterbildung werden die in den Messzyklen gefundenen Unterscheidungen zwischen auf Reflektionen an einem seitlich in den Behälter hineinragenden Störer zurückzuführenden Maxima und auf Reflektionen an der Füllgutoberfläche oder am Behälterboden zurückzuführenden Maxima der Messkurven bei einer nachfolgenden Bestimmung des Füllstands, insb. in einem Verfahren zur Ausblendung von auf Reflektionen am Störer zurückzuführenden Amplitudenanteilen der jeweiligen Messkurven oder bei der Ausführung oder Überprüfung eines Verfahrens, bei dem für mindestens einen Reflektor eine zeitliche Entwicklung der auf Reflektionen an dem jeweiligen Reflektor zurückzuführenden Maxima anhand von in zeitlich nacheinander ausgeführten Messzyklen abgeleiteten Messkurven bestimmt wird, eingesetzt wird.

Ein nach dem Pulsradarprinzip arbeitendes Füllstandsmessgerät gemäß der zuvor beschriebenen Alternative ermöglicht ein weiteres Verfahren zur Messung eines Füllstands eines Füllguts in einem Behälter, mittels eines nach dem Pulsradarprinzip arbeitenden Füllstandsmessgeräts gemäß der ersten Variante in Anwendungen in denen das Füllgut eine im Wesentlichen rotationssymmetrisch zur Achse der Hauptsenderichtung verlaufende Füllgutoberfläche ausbildet, bei dem

- in einem Messzyklus Messungen mit Sendesignalen verschiedener Mittenfrequenzen ausgeführt werden, bei denen jeweils

  -- ein Mikrowellenpulse einer für die jeweilige Messung vorgegebenen Mittenfrequenz aufweisendes Sendesignal gesendet,
  -- dessen zugehöriges Empfangssignal empfangen, und
  -- anhand des Empfangssignals jeweils eine Messkurve abgeleitet wird, die die Amplitude des jeweiligen Empfangssignals als Funktion der zugehörigen Signallaufzeit wiedergibt,

- die Sendesingale bedingt durch die bei den unterschiedlichen Mittenfrequenzen verschiedenen Öffnungswinkel der Hauptkeulen in den einzelnen Messungen unterschiedlich große konzentrische Bereiche im Behälter ausleuchten, und
- anhand der konzentrischen Bereiche und den Amplitudenverläufen der Messkurven in einem Laufzeitbereich, in dem in den Messkurven auf Reflektionen am Füllgut zurückzuführende Maxima auftreten, ein Profil der Füllgutoberfläche im Behälter abgeleitet wird.

Eine Weiterbildung dieses Verfahrens umfasst ein Verfahren, bei dem

- das Füllgut im Behälter einen Schüttkegel ausbildet, dessen Kegellängsachse mit der Achse der Hauptsenderichtung der Antenne zusammenfällt,
- anhand der Laufzeit, bei der das auf die Reflektion am Füllgut zurückzuführende Maximum der mit der höchsten Mittenfrequenz abgeleiteten Messkurve auftritt, eine Füllhöhe des Füllguts im Bereich der Kegelspitze bestimmt wird,
- Differenzen zwischen den einzelnen mit Sendesignalen benachbarter Mittenfrequenz abgeleiteten Messkurven gebildet werden,
- für jede Differenz eine Laufzeit des Maximums der jeweiligen Differenz bestimmt wird,
- den Differenzen jeweils ein mittlerer mit der Achse der Hauptsenderichtung eingeschlossener Sendewinkel zugeordnet wird, unter dem das die jeweils niedrigere Mittenfrequenz aufweisende Sendesignal auf einen Ringbereich gesendet wird, der außerhalb des mit dem Sendesignal mit der jeweils höheren Mittenfrequenz ausgeleuchteten Bereichs und innerhalb des mit dem Sendesignal mit der jeweils niedrigeren Mittenfrequenz ausgeleuchteten Bereich liegt, und
- anhand der Laufzeiten der Maxima der Differenzen und den zugehörigen Sendewinkeln Füllhöhen des Füllguts im Behälter in über die jeweils zugehörige Laufzeit und den zugehörigen Sendwinkel bestimmten Abständen von der Kegelachse senkrecht zur Kegelachse bestimmt werden.

Eine Weiterbildung dieses Verfahrens umfasst ein Verfahren zur Messung eines Füllstands eines Füllguts in einem Behälter mittels eines nach dem Pulsradarprinzip arbeitenden Füllstandsmessgeräts gemäß der Ausgestaltung der ersten Variante mit einer Antenne mit endseitig reflexionsfrei abgeschlossenem Rechteck-Hohlleiter, bei dem

- in einem Messzyklus Messungen mit Sendesignalen verschiedener Mittenfrequenzen ausgeführt werden, bei denen jeweils

  -- ein Mikrowellenpulse einer für die jeweilige Messung vorgegebenen Mittenfrequenz aufweisendes Sendesignal gesendet,
  -- dessen zugehöriges Empfangssignal empfangen, und
  -- anhand des Empfangssignals jeweils eine Messkurve abgeleitet wird, die die Amplitude des jeweiligen Empfangssignals als Funktion der zugehörigen Signallaufzeit wiedergibt,

- für jede Messkurve die Laufzeit des darin enthaltenen auf eine Reflektion an der Füllgutoberfläche zurückzuführenden Maximums bestimmt wird, und
- anhand dieser Laufzeiten, den Mittenfrequenzen der zugehörigen Sendesignale und den Winkeln, die die sich bei den jeweiligen Mittenfrequenzen ausbildende Hauptsendekeule mit der Flächennormale einschließt, Füllhöhen des Füllguts im Behälter in über die Laufzeiten und den jeweils dazugehörigen Winkel bestimmten Abständen von der Flächennormalen senkrecht zur Flächennormale bestimmt werden.

Die Erfindung umfasst ein zweites Verfahren zur Messung eines Füllstands eines Füllguts in einem Behälter mittels eines nach dem Pulsradarprinzip arbeitenden Füllstandsmessgeräts gemäß der weiteren Ausgestaltung der ersten Variante mit einer Antenne mit endseitig offenem oder kurzgeschlossenem Rechteck-Hohlleiter in Anwendungen in denen das Füllgut eine in einer Sendeebene der Antenne im Wesentlichen symmetrisch zur Flächennormale auf den Rechteck-Hohlleiter verlaufende Füllgutoberfläche ausbildet, bei dem

- in einem Messzyklus Messungen mit Sendesignalen verschiedener Mittenfrequenzen ausgeführt werden, bei denen jeweils

  -- ein Mikrowellenpulse einer für die jeweilige Messung vorgegebenen Mittenfrequenz aufweisendes Sendesignal gesendet,
  -- dessen zugehöriges Empfangssignal empfangen, und

-- anhand des Empfangssignals jeweils eine Messkurve abgeleitet wird, die die Amplitude des jeweiligen Empfangssignals als Funktion der zugehörigen Signallaufzeit wiedergibt,

- für jede Messkurve die Laufzeit des darin enthaltenen auf eine Reflektion an der Füllgutoberfläche zurückzuführenden Maximums bestimmt wird, und
- anhand dieser Laufzeiten, den Mittenfrequenzen der zugehörigen Sendesignale und den Winkeln, den die sich bei der jeweiligen Mittenfrequenz ausbildenden Hauptsendekeulen mit der Flächennormale einschließen, Füllhöhen des Füllguts im Behälter in über die Laufzeiten und den jeweils dazugehörigen Winkel bestimmten Abständen von der Flächennormalen senkrecht zur Flächennormale bestimmt werden.

Weiter umfasst die Erfindung ein Verfahren gemäß einer Weiterbildung des Verfahrens, bei dem anhand der durch die Füllhöhen und die jeweils zugehörigen Abstände, bei denen sie auftreten, gegebenen Messpunkte, insb. durch Interpolation, Filterung, oder Glättung, ein Profil abgeleitet wird, dass die Füllhöhe als Funktion des Abstands wiedergibt.

Gemäß einer Weiterbildung des letztgenannten Verfahrens wird das Profil auf Knicke oder Sprünge der Füllhöhe als Funktion des Abstands untersucht.

Gemäß einer bevorzugten Ausführungsform der vorgenannten Verfahren werden die Amplituden der Messkurven einer Normierung unterzogen, die die von der Mittenfrequenz der Mikrowellenpulse des jeweiligen Sendesignals abhängige Richtungsabhängigkeit der Abstrahlcharakteristik der Antenne berücksichtigt.

Die erfindungsgemäßen Füllstandsmessgeräte bieten den Vorteil, dass sie in einem vergleichsweise breiten Spektrum unterschiedlicher Anwendungen, insb. in Anwendungen mit seitlich in den Behälter hineinragenden Störern und in Anwendungen mit Schüttkegeln ausbildenden Füllgütern, zuverlässig einsetzbar sind. Da sie nur eine einzige mechanisch starre Antenne benötigen sind sie im Vergleich zu Füllstandsmessgeräten mit schwenkbaren Antennen mechanisch robust, und weniger anfällig gegenüber Verschmutzungen. Darüber hinaus benötigen sie im Vergleich zu Messgeräten mit mehreren Sende- und/oder Empfangsantennen wenig Platz am Einbauort. Insb. wird nur eine einzige Behälteröffnung für die Montage der Antenne benötigt, die darüber hinaus deutlich kleiner sein kann, als Behälteröffnungen für mechanisch schwenkbare Antennen und deutlich aufwendigere abbildende Radarsysteme.

Die Erfindung und deren Vorteile werden nun anhand der Figuren der Zeichnung, in denen zwei Ausführungsbeispiele dargestellt sind, näher erläutert; gleiche Teile sind in den Figuren mit gleichen Bezugszeichen versehen.

Fig. 1 zeigt: eine Füllstandsmessanordnung mit einem mit einer Hornantenne ausgestatteten Füllstandsmessgerät, bei der ein Störer seitlich in den Behälter hinein ragt;

Fig. 2 zeigt: eine Füllstandsmessanordnung mit einem mit einer Hornantenne ausgestatteten Füllstandsmessgerät, bei der sich ein Schüttgutkegel im Behälter befindet;

Fig. 3a zeigt: mit der Füllstandsmessanordnung von Fig. 2 bei der höchsten und bei der nächstniedrigeren Mittenfrequenz aufgezeichnete Messkurven im Laufzeitbereich der auf die Reflektion an der Füllgutoberfläche zurückzuführenden Maxima der Messkurven;

Fig. 3b zeigt: die bei der höchsten Mittenfrequenz aufgezeichnete Messkurve von Fig. 3a zusammen mit der normierten bei der nächstniedrigeren Mittenfrequenz aufgezeichneten Messkurve von Fig. 3a;

Fig. 3c zeigt: die Differenz der beiden in Fig. 3b dargestellten Messkurven;

Fig. 4 zeigt: den Behälter von Fig. 2 zusammen mit Messpunkten eines mit der Messanordnung von Fig. 2 erstellten Profils der Füllgutoberfläche;

Fig. 5 zeigt: eine Füllstandsmessanordnung mit einem mit einer endseitig reflexionsfrei abgeschlossenen Hohlleiter-Schlitzantenne ausgestatteten Füllstandsmessgerät, bei der das Füllgut einen seitlich ins Sichtfeld der Antenne hineinragenden Berg ausbildet;

Fig. 6 zeigt: einen Rechteck-Hohlleiter einer Hohlleiter-Schlitzantenne;

Fig. 7 zeigt: eine Hohlleiter-Schlitzantenne mit einem Rechteck-Hohlleiter und einem darauf montierten Hohlleitersegment;

Fig. 8 zeigt: einen Rechteck-Hohlleiter einer Hohlleiter-Schlitzantenne in Verbindung mit einer dielektrischen Linse;

Fig. 9 zeigt: eine für eine vorgegebene Frequenz ausgelegte Dimensionierung und Positionierung schlitzförmiger Ausnehmungen einer Hohlleiter-Schlitzantenne;

Fig. 10 zeigt: eine für ein Spektrum von Mittenfrequenzen ausgelegte Dimensionierung und Positionierung schlitzförmiger Ausnehmungen einer Hohlleiter-Schlitzantenne; und

Fig. 11 zeigt: ein Antennendiagramm der Hohlleiter-Schlitzantenne von Fig. 10 mit endseitig kurzgeschlossenen Rechteck-Hohlleiter.

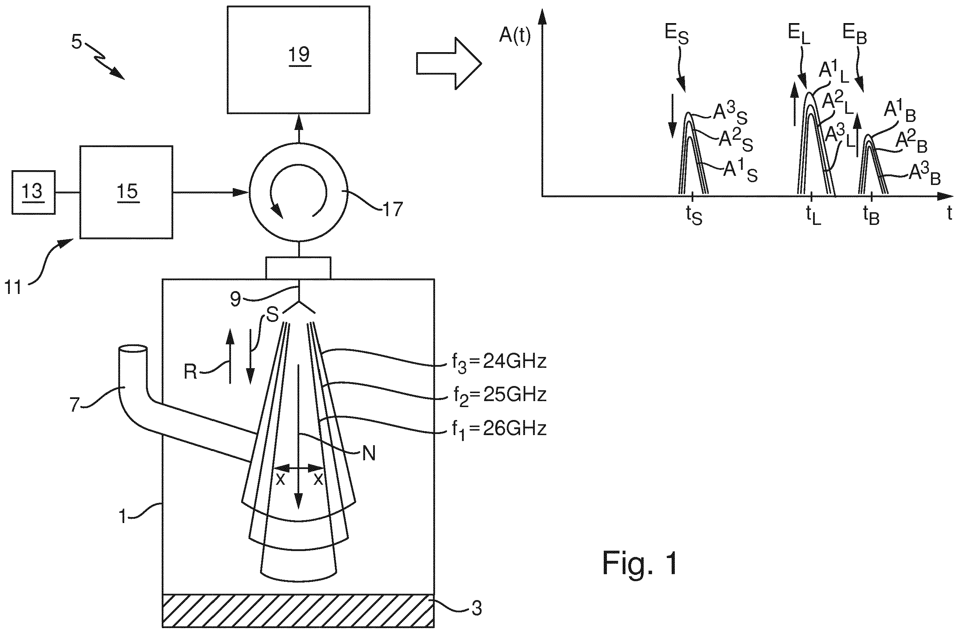

Fig. 1 zeigt eine schematische Darstellung einer Füllstandsmessanordnung. Dort wird in einem Behälter 1 ein Füllstands L eines eine planare Oberfläche ausbildenden Füllguts 3 mit einem nach dem Pulsradarprinzip arbeitenden Füllstandsmessgerät 5 gemessen. In dem dargestellten Anwendungsbeispiel ist exemplarisch ein seitlich in den Behälter 1 hineinragender Störer 7, z.B. eine Behältereinbaute, dargestellt.

Das Füllstandsmessgerät 5 weist eine einzige oberhalb des höchsten zu messenden Füllstands L im Behälter 1 montierte in Richtung des Füllguts 3 ausgerichtete Antenne 9 auf, über die im Messbetrieb Sendesignale S in Richtung des Füllguts 3 gesendet, und deren im Behälter 1 in Richtung der Antenne 9 zurück reflektierten Signalanteile als Empfangssignale R empfangen werden.

Das Füllstandsmessgerät 5 weist eine Sendeeinrichtung 11 auf, die eine an eine Steuerung 13 angeschlossene Pulserzeugungseinrichtung 15 umfasst, die derart ausgestaltet ist, dass sie im Messbetrieb gemäß vorgegebenen jeweils mindestens zwei Messungen umfassenden Messzyklen Sendesignale $S_n$ erzeugt. Jedes Sendesignal $S_n$ besteht aus mittels der Pulserzeugungseinrichtung 15 mit einer vorgegebenen Wiederhohlrate erzeugten Mikrowellenpulsen einer für die jeweilige Messung vorgegebenen Mittenfrequenz $f_n$. Dabei wird die für die jeweilige Messung vorgegebene Mittenfrequenz $f_n$ der Mikrowellenpulse des in der Messung verwendeten Sendesignals $S_n$ von der Steuerung 13 vorgegeben. Grundsätzlich können bei Bedarf auch sehr kurze Sendesignale $S_n$, insb. Sendesignale $S_n$ aus einigen wenigen, z.B. 3 - 8, aufeinander folgenden Mikrowellenpulsen, eingesetzt werden. Vorzugsweise werden jedoch in Anpassung an die messtechnisch zu erfassende Maximaldistanz zwischen Füllgut 3 und Füllstandsmessgerät 5 Sendesignale $S_n$ mit einer deutlich größeren Anzahl aufeinander folgender Mikrowellenpulse eingesetzt.

In jedem Messzyklus werden mindestens zwei Messungen durchgeführt, die sich durch die Mittenfrequenz $f_n$ der Mikrowellenpulse der bei der jeweiligen Messung gesendeten Sendesignale $S_n$ unterscheiden. Vorzugsweise wird eine deutlich größere Anzahl, z.B. von 30 - 50, verschiedener Mittenfrequenzen $f_n$ in einer entsprechend großen Anzahl von Messungen eingesetzt.

Die Sendesignale $S_n$ werden über eine an die Sendeeinrichtung 11 angeschlossene Sende-/Empfangsweiche 17, z.B. einen Zirkulator oder einen Richtkoppler in Verbindung mit einem angepassten Abschluss, zur Antenne 9 übertragen. Die Antenne 9 sendet die Sendesignale $S_n$ in Richtung des Füllguts 3 in den Behälter 1, und empfängt deren an einem im Behälter 1 befindlichen Reflektor, insb. an der Füllgutoberfläche, am Behälterboden oder am Störer 7, in Richtung der Antenne 9 zurück reflektierten Signalanteile nach einer von der Entfernung des jeweiligen Reflektors vom Füllstandsmessgerät 5 und der Ausbreitungsgeschwindigkeit der Mikrowellenpulse abhängigen Laufzeit t. Die Summe der empfangenen reflektierten Signalanteile bildet jeweils ein Empfangssignal $R_n$, das über die Sende-/Empfangsweiche 17 einer an die Sendeeinrichtung 11 und die Antenne 9 angeschlossenen Signalverarbeitungseinrichtung 19 zugeführt wird, die die Empfangssignale $R_n$ unter Berücksichtigung der von der Mittenfrequenz $f_n$ der Mikrowellenpulse der zugehörigen Sendesignale $S_n$ abhängigen Abstrahlcharakteristik der Antenne 9 auswertet.

Die Antenne 9 weist eine von der Frequenz f der zu sendenden Signale abhängige räumliche Abtrahlcharakteristik auf. Die Abstrahlcharakteristik entspricht der Richtungsabhängigkeit des Antennengewinns. Damit ist die beim Senden eines Sendesignals $S_n$ in die einzelnen Raumrichtungen bei gleicher Gesamtsendeleistung gesendete Strahlungsdichte abhängig von der Mittenfrequenz $f_n$ der Mikrowellenpulse des jeweiligen Sendesignals $S_n$ und für Sendesignale $S_n$ unterschiedlicher Mittenfrequenz $f_n$ verschieden.

Gemäß einer in Fig. 1 dargestellten Variante kann eine Antenne 9 eingesetzt werden, deren Abstrahlcharakteristik eine einzige in eine für alle Mittenfrequenzen $f_n$ gleiche Hauptsenderichtung N abgestrahlte dominante Hauptkeule umfasst, deren Öffnungswinkel $\alpha_n$ mit abnehmender Mittenfrequenz $f_n$ der Sendesignale $S_n$ ansteigt.

Hierzu können beispielsweise Hornantennen eingesetzt werden, wie sie heute bereits in herkömmlichen Füllstandsmessgeräten eingesetzt werden. Herkömmliche Hornantennen werden heute mit einer festen Mittenfrequenz und einer im Wesentlichen durch den Kehrwert der Pulsdauer vorgegebenen Bandbreite betrieben. Sie sind jedoch regelmäßig breitbandig genug, um auch mit von dieser Mittenfrequenz abweichenden Mittenfrequenzen betrieben zu werden. Vorzugsweise werden sie in dem Füllstandsmessgerät 5 mit unterschiedlichen Mittenfrequenzen $f_n$ betrieben, die alle innerhalb eines vorgegebenen ISM-Bands liegen. Bevorzugte Frequenzbereiche für die Mittenfrequenzen $f_n$ sind insb. Mittenfrequenzen im Bereich von 4 GHz - 8 GHz im C-Band, in der Größenordnung von 10 GHz im X Band, in der Größenordnung von 77 GHz im E-Band, oder in der Größenordnung von 123 GHz im F-Band. Weitere bevorzugte Frequenzbereiche liegen bei 2,4 GHz - 2,5 GHz, bei 5,7 GHz - 5,8 GHz, bei 24 GHz-26 GHz, sowie in der Größenordnung von 61 GHz, 110 GHZ oder 245 GHz.

Alternativ können auch Reflektorantennen, insb. Parabolantennen, eingesetzt werden. Grundsätzlich ist auch der Einsatz von dielektrischen Stabantennen möglich. Letztere weisen jedoch auch bei höheren Mittenfrequenzen $f_n$ bereits Hauptkeulen mit vergleichsweise großen Öffnungswinkeln auf, so dass die durch geringe Variationen der Mittenfrequenzen erzielbaren Öffnungswinkeländerungen hier geringer ausfallen, als bei den anderen genannten Antennentypen.

Genau wie bei herkömmlichen Pulsradarfüllstandsmessgeräten leitet auch das Füllstandsmessgerät 5 anhand der Empfangssignale $R_n$ jeweils eine Messkurve $A_n(t)$ ab, die die Amplitude A des jeweiligen Empfangssignals $R_n$ als Funktion der zugehörigen Signallaufzeit t wiedergibt.

Hierzu werden die Empfangssignale $R_n$ vorzugsweise einem Referenzsignal überlagert, das aus Mikrowellenpulsen besteht, die die gleiche Pulsdauer und die gleiche Mittenfrequenz $f_n$ aufweisen, wie die Mikrowellenpulse des Sendesignals $S_n$, die jedoch periodisch mit einer Wiederhohlrate generiert werden, die sich von der Wiederhohlrate, mit der die Mikrowellenpulse des Sendesignals $S_n$ generiert werden, um eine geringe Frequenzdifferenz unterscheidet. Diese Überlagerung bewirkt eine stroboskopische Abtastung der nacheinander eingehenden im Wesentlichen identischen Reflektionspulse, an deren Ende ein zeitgedehntes Abbild des Amplitudenverlaufs eines Reflektionspulses als Funktion der Laufzeit zur Verfügung steht. Entsprechende Signalaufbereitungs-, Verarbeitungs- und Auswerteverfahren sind aus dem Stand der Technik hinlänglich bekannt und daher hier nicht im Detail beschrieben.

Um eine Vergleichbarkeit der Amplitudenwerte der einzelnen Messkurven $A_n(t)$ zu erzielen, werden die Amplituden A der Messkurven $A_n(t)$ einer Normierung unterzogen, die die von der Mittenfrequenz $f_n$ der Mikrowellenpulse der jeweiligen Sendesignale $S_n$ abhängige Richtungsabhängigkeit der Abstrahlcharakteristik der Antenne 7 berücksichtigt. Hierdurch wird die bei den einzelnen Messungen bei gleicher Sendeleistung der Antenne 7 unterschiedliche pro Raumwinkel gesendete Strahlungsdichte berücksichtigt. Werden bei denen einzelnen Messungen unterschiedliche Sendeleistungen eingesetzt, so ist dies ebenfalls durch entsprechende Normierung der Messkurven $A_n(t)$ zu berücksichtigen.

Soweit sich bei den einzelnen Messungen bei unterschiedlichen Mittenfrequenzen $f_n$ bedingt durch die Signalaufbereitung und Verarbeitung unterschiedliche Zeitdehnungsfaktoren bei den zeitgedehnten Abbildungen der Amplitudenverläufe ergeben, sind diese nachfolgend natürlich ebenfalls zu berücksichtigen. Dies geschieht vorzugsweise durch den einzelnen Ableitungen nachgeschaltete Skalierungen, durch die die Messkurven $A_n(t)$ der einzelnen Messungen auf die gleiche Zeitskala bezogen werden.

Im Unterschied zu herkömmlichen Plusradar-Füllstandsmessgeräten, bei denen alle Messungen mit identischen Sendesignalen S ausgeführt werden, werden mit dem in Fig. 1 dargestellten Füllstandsmessgerät Messzyklen ausgeführt, die mindestens zwei Messungen umfassen, die sich durch die Mittenfrequenz $f_n$ der Mikrowellenpulse der dazu verwendeten Sendesignale $S_n$ unterscheiden.

Das zugrundeliegende Messprinzip ist nachfolgend am Beispiel eines drei Messungen umfassenden Messzyklusses beschrieben. Vorzugsweise werden jedoch Messungen bei einer sehr viel größeren Anzahl unterschiedlicher Mittenfrequenzen $f_n$, beispielsweise bei 30 - 50 verschiedenen Mittenfrequenzen $f_n$, ausgeführt.

Bei der ersten Messung wird ein erstes Sendesignal $S_1$ ausgesendet, dessen Mikrowellenpulse eine Mittenfrequenz $f_1$, beispielsweise eine Mittenfrequenz von 26 GHz, aufweisen. Bei der zweiten Messung wird ein zweites Sendesignal $S_2$ ausgesendet, dessen Mikrowellenpulse eine geringere Mittenfrequenz $f_2$, beispielsweise eine Mittenfrequenz von 25 GHz, aufweisen. Bei der dritten Messung wird ein drittes Sendesignal $S_3$ ausgesendet, dessen Mikrowellenpulse eine noch geringere Mittenfrequenz $f_3$, hier eine Mittenfrequenz von 24 GHz, aufweisen.

Zur Veranschaulichung sind in Fig. 1 die zu den einzelnen Messungen zugehörigen räumlichen Abstrahlcharakteristiken der Antenne 9 im Vergleich zueinander dargestellt. Die Abstrahlcharakteristiken weisen jeweils eine in die Hauptsenderichtung N weisende Hauptkeule auf, deren Öffnungswinkel $\alpha_n$ mit abnehmender Mittenfrequenz $f_n$ größer wird.

Für jede der drei Messungen wird anhand des dort jeweils erhaltenen Empfangssignal $R_1$, $R_2$, $R_3$ eine auf die oben beschriebene Weise normierte und skalierte Messkurve $A^1(t)$, $A^2(t)$, $A^3(t)$ abgeleitet, die die Amplitude A des jeweiligen Empfangssignals $R_1$, $R_2$, $R_3$ als Funktion der zugehörigen Signallaufzeit t wiedergibt.

Die drei vorliegend mittels der Signalverarbeitungseinrichtung 19 abgeleiteten Messkurven $A^1(t)$, $A^2(t)$, $A^3(t)$ sind in der in Fig. 1 rechts neben der Signalverarbeitungseinrichtung 19 eingefügten Teilabbildung im Vergleich zueinander dargestellt. Für jede Messkurve $A^n(t)$ mit n = 1, 2, 3 werden Laufzeit $t^n_S$, $t^n_L$, $t^n_B$ und Maximalamplitude $A^n_S$, $A^n_L$, $A^n_B$ der darin enthaltenen Maxima $E_S$, $E_L$, $E_B$ bestimmt. Jedes dieser Maxima $E_S$, $E_L$, $E_B$ ist jeweils auf eine Reflektion an einem im Behälter 1 befindlichen Reflektor zurückzuführen. In dem vorliegenden Beispiel enthalten alle drei Messkurven $A^1(t)$, $A^2(t)$, $A^3(t)$ jeweils ein auf eine Reflektion am seitlich in den Strahlengang hineinragenden Störer 7 zurückzuführendes Maximum Es, ein auf eine Reflektion an der Füllgutoberfläche zurückzuführendes Maximum $E_L$, und ein auf eine Reflektion am Behälterboden zurückzuführendes Maximum $E_B$.

Auf den gleichen Reflektor zurückzuführende Maxima Es, $E_L$, $E_B$ treten in den verschiedenen Messkurven $A^1(t)$, $A^2(t)$, $A^3(t)$ ungefähr bei dergleichen Laufzeit $t_S \approx t^1_S \approx t^2_S \approx t^3_S$, $t_L \approx t^1_L \approx t^2_L \approx t^3_L$, $t_B \approx t^1_B \approx t^2_B \approx t^3_B$ auf. Dementsprechend werden anhand der für die einzelnen Messkurven $A^n(t)$ ermittelten Laufzeiten $t^n_S$, $t^n_L$, $t^n_B$ die in den verschiedenen Messkurven $A^1(t)$, $A^2(t)$,

$A^3(t)$ enthaltenen Maxima $E_S$, $E_L$, $E_B$ bestimmt, die auf den gleichen Reflektor zurückzuführen sind.

Anhand der einzelnen mit unterschiedlichen Mittenfrequenzen $f_1$, $f_2$, $f_3$ aufgenommenen Messkurven $A^1(t)$, $A^2(t)$, $A^3(t)$ kann nun anhand der verschiedenen Maximalamplituden $A^1_S$, $A^2_S$, $A^3_S$; $A^1_L$, $A^2_L$, $A^3_L$; $A^1_B$, $A^2_B$, $A^3_B$ der auf den gleichen Reflektor zurückzuführenden Maxima $E_S$, $E_L$, $E_B$ der Messkurven $A^1(t)$, $A^2(t)$, $A^3(t)$ eine Information über einen Abstand x abgeleitet werden, in dem sich der jeweilige Reflektor in einer senkrecht zur durch Hauptsenderichtung N der Antenne 9 verlaufenden Ebene von der Achse der Hauptsenderichtung N befindet.

Diese Ableitung beruht darauf, dass auf den gleichen Reflektor zurückzuführenden Maxima Es, $E_L$, $E_B$ unterschiedlicher Messkurven $A^n(t)$ bei größerem Abstand x dieses Reflektors von der Achse der Hauptsenderichtung N bei höheren Mittenfrequenzen $f_n$ eine niedrigere Maximalamplitude aufweisen als bei niedrigeren Mittenfrequenzen $f_n$, während bei sie geringem Abstand x bei höheren Mittenfrequenzen $f_n$ eine größere Maximalamplitude A aufweisen als bei niedrigen.

In dem vorliegenden Beispiel weist das auf den Störer 7 zurückzuführende Maximum Es aufgrund des vergleichsweise großen Abstands x des Störers 7 von der Achse der Hauptsenderichtung N in der bei der höchsten Mittenfrequenz $f_1$ = 26 GHz aufgezeichneten Messkurve $A^1(t)$ die kleinste Maximalamplitude $A^1_S$ und in der bei kleinsten Mittenfrequenz $f_3$ = 24 GHz aufgezeichneten Messkurve $A^3(t)$ die größte Maximalamplitude $A^3_S$ auf. Umgekehrt weisen die auf die Füllgutoberfläche und die auf den Behälterboden zurückzuführenden Maxima $E_L$, $E_B$ auf Grund deren im Mittel über den von der Hauptkeule bei den jeweiligen Öffnungswinkeln $\alpha_n$ jeweils ausgeleuchteten Bereich geringen Abstands x in der bei der höchsten Mittenfrequenz $f_1$ = 26 GHz aufgezeichneten Messkurve $A^1(t)$ die größte Maximalamplitude $A^1_L$, $A^1_B$ und in der bei der niedrigsten Mittenfrequenz $f_3$ = 24 GHz aufgezeichneten Messkurve $A^3(t)$ die kleinste Maximalamplitude $A^3_L$, $A^3_B$ auf.

Da sich die Hauptkeule der Abstrahlcharakteristik der Antenne 9 unabhängig von der Frequenz der Signale vorliegend rotationssymmetrisch zur Achse der Hauptsenderichtung N ausbildet, kann hieraus jedoch nur der jeweilige Abstand x an sich, nicht aber die räumliche Position des jeweiligen Reflektors in der Ebene senkrecht zur Achse der Hauptsenderichtung N bestimmt werden. Es lässt sich also nicht feststellen, ob sich der Störer 7 in der Darstellung von Fig. 1 in der linken oder in der rechten Hälfte der Zeichnungsebene bzw. davor oder dahinter befindet.

Die Bestimmung der Abstände x erfolgt vorzugsweise numerisch anhand der hierzu von der Signalverarbeitungseinrichtung 19 in digitaler Form ermittelten normierten Maximalamplituden $A^1_S$, $A^2_S$, $A^3_S$; $A^1_L$, $A^2_L$, $A^3_L$; $A^1_B$, $A^2_B$, $A^3_B$.
Bei entsprechender Kalibration können neben den oben genannten qualitativen Aussagen über die Abstände x näherungsweise auch quantitative Angaben über die Abstände x gewonnen werden.

Die auf die oben beschriebene Weise erhaltene Information über die Abstände x der einzelnen Reflektoren kann nun insb. dazu verwendet werden, die Zuordnung der einzelnen Maxima $E_S$, $E_L$, $E_B$ zu den entsprechenden Reflektoren, hier dem Störer 7, der Füllgutoberfläche und dem Behälterboden, sicherer und zuverlässiger zu machen. Da Störer 7 in Füllstandsmessanordnungen immer nur seitlich in den Strahlengang hinein ragen, sich aber nicht unmittelbar unter der Antenne 9 befinden dürfen - in dem Fall wäre ein Füllstandsmessung ohnehin nicht möglich - können anhand der Abstandsinformationen auf Reflektionen an der Füllgutoberfläche bzw. am Behälterboden zurückzuführende Maxima $E_L$, $E_B$ zuverlässig von auf Reflektionen am Störer 7 zurückzuführenden Maxima $E_S$ unterschieden werden.

Diese Information kann vom Füllstandsmessgerät 5 mittels der Signalverarbeitungseinrichtung 19 selbsttätig abgeleitet und zur Verfügung gestellt oder unmittelbar weiter verwendet werden.

Entsprechend ist es nunmehr möglich anhand der Abstandsinformationen Maxima Es von im Behälter 1 befindlichen Störern 7 zu identifizieren, den Verlauf der Messkurven $A_n(t)$ in der Umgebung der Laufzeit ts bei der das auf den jeweiligen Störer 7 zurückzuführende Maximum As auftritt zu ermitteln, und bei nachfolgenden Füllstandsmessungen anhand dieser Informationen die eingangs beschriebene Störechoausblendung auszuführen.

Alternativ oder zusätzlich hierzu kann die anhand der Abstandsinformation zuverlässiger mögliche Zuordnung der Maxima zu den zugehörigen Reflektoren zur Ausführung der eingangs beschriebenen Echoverfolgungsverfahren eingesetzt werden. Damit kann vom Füllstandsmessgerät zu Beginn des Echoverfolgungsverfahrens selbsttätig in einem Start-Messzyklus eine zuverlässige Zuordnung der einzelnen Maxima E der Messkurven A(t) zu den jeweils zugehörigen Reflektoren vorgenommen werden. Darüber hinaus kann die anhand der Abstandsinformation zuverlässiger mögliche Zuordnung fortwährend dazu eingesetzt werden, um zu überprüfen, ob die über das Echoverfolgungsverfahren sich ergebende Zuordnung der einzelnen Maxima E der Messkurven A(t) zu den jeweiligen Reflektoren weiterhin korrekt ist.

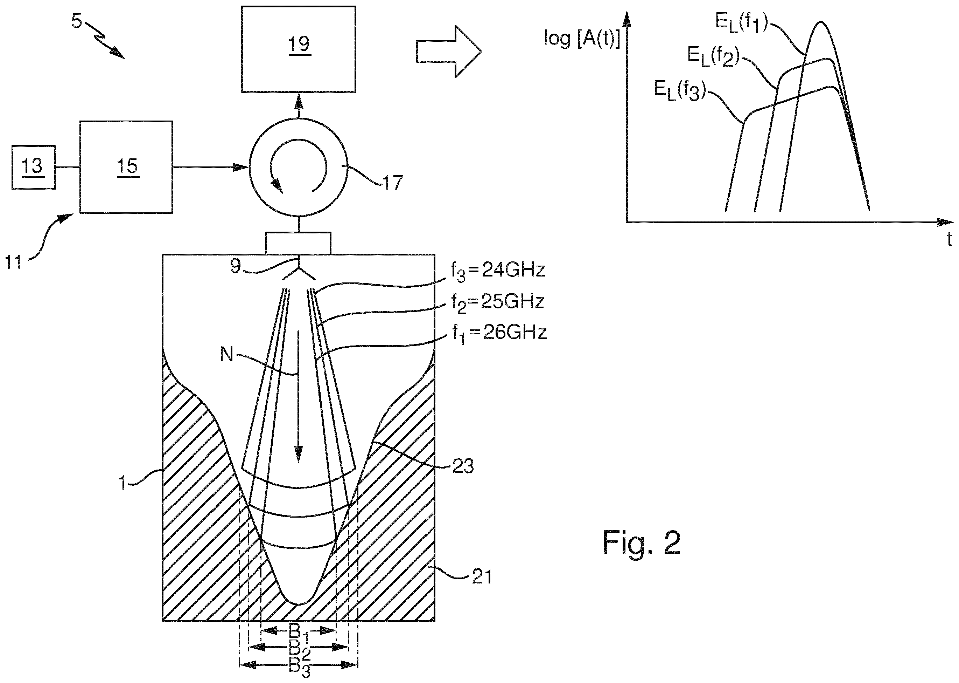

Fig. 2 zeigt eine weitere Füllstandsmessanordnung mit dem bereits anhand von Fig. 1 beschriebenen Füllstandsmessgerät 5. Die Messanordnung unterscheidet sich von der in Fig. 1 dargestellten lediglich dadurch, dass kein Störer 7 vorgesehen ist, und hier ein Schüttgut als Füllgut 21 vorgesehen ist, dass im Behälter 1 einen Schüttkegel 23 ausbildet. Der Schüttkegel 23 weist eine Kegellängsachse auf, der mit der Achse der Hauptsenderichtung N der Antenne 9 zusammenfällt.

Auch hier werden Messzyklen ausgeführt, die jeweils mindestens zwei mit Sendesignalen $S_n$ unterschiedlicher Mittenfrequenz $f_n$ der darin enthaltenen Mi-

krowellenpulse ausgeführte Messungen umfassen. In der rechts von der Empfangs- und Auswerteschaltung 19 dargestellten Teilabbildung sind exemplarisch bei drei unterschiedlichen Mittenfrequenzen $f_1$, $f_2$, $f_3$ aufgezeichnete Messkurven $A^n(t)$ in logarithmischer Darstellung nebeneinander eingezeichnet. Auch hier werden vorzugsweise in jedem Messzyklus Messungen bei einer deutlich größeren Anzahl unterschiedlicher Mittenfrequenzen $f_n$ ausgeführt. Zur besseren Übersicht ist in Fig. 2 jeweils nur ein Laufzeitbereich der Messkurven $A_n(t)$ dargestellt, in dem die auf die Reflektion am Füllgut 21 zurückzuführenden Maxima $E_L(f_1)$, $E_L(f_2)$, $E_L(f_3)$ der einzelnen Messkurven $A_n(t)$ auftreten.

Aufgrund der verschiedenen in den einzelnen Messungen verwendeten Mittenfrequenzen $f_n$ und den daraus resultierenden unterschiedlichen Öffnungswinkeln $\alpha_n$ der gesendeten Hauptkeulen leuchten die Sendesignale $S_n$ jeweils unterschiedlich große konzentrisch zur Hauptsenderichtung N und zur Längsachse des Schüttkegels 23 verlaufende Kegelinnenflächen B1, B2, B3 aus. Dementsprechend weisen die auf die Reflektionen an der Schüttkegelinnenfläche zurückzuführenden Maxima $E_L(f_n)$ der einzelnen Messkurven $A_n(t)$ einen Amplitudenverlauf über einen Laufzeitbereich auf, der maßgeblich von der Schüttkegelform, dem mittenfrequenz-abhängigen Öffnungswinkel $\alpha_n$ der Hauptkeule N, und der Sendeleistung der Antenne 9 abhängig ist.

Vorliegend wurde bei allen Messungen die gleiche Sendeleistung eingesetzt, so dass die auf die Schüttkegelinnenfläche auftreffende Strahlungsdichte mit zunehmendem Öffnungswinkel $\alpha_n$ abnimmt. Letzteres schlägt sich unmittelbar in den Absolutwerten der Amplituden A der einzelnen Messkurven $A^n(t)$ nieder, und wird vorzugsweise durch die oben beschriebene Normierung der einzelnen Messkurven $A^n(t)$ berücksichtigt.

In dem Amplitudenverlauf der bei den ausgewählten unterschiedlichen Mittenfrequenzen $f_n$ aufgezeichneten Messkurven $A^n(t)$ ist die Information über die Entfernungen der Schüttkegelinnenflächen vom Füllstandsmessgerät 5 in den bei den jeweiligen Mittenfrequenzen $f_n$ jeweils ausgeleuchteten konzentrischen Bereichen B1, B2, B3 enthalten. Diese Information kann beispielsweise anhand der bei der höchsten Mittenfrequenz $f_1$ abgeleiteten Messkurve $A^1(t)$ und Differenzbildungen zwischen jeweils zwei mit benachbarten Mittenfrequenzen $f_{n+1}$, $f_n$ aufgenommenen normierten Messkurven $A^{n+1}(t)$, $A_n(t)$ abgeleitet werden.

Die Differenzen $\Delta_{n+1,n}$ werden gemäß:

$$\Delta_{n+1,n}(t) = A^{n+1}(t) - A^n(t)$$

gebildet. Sie geben die Amplituden der Signalanteile der Sendesignale $S_{n+1}$ wieder, die in einem außerhalb des mit dem Sendesignal $S_n$ der höheren Mittenfrequenz $f_n$ ausgeleuchteten Bereich $B_n$ und innerhalb des mit dem Sendesignal $S_{n+1}$ der nächstniedrigeren Mittenfrequenz $f_{n+1}$ ausgeleuchteten Bereichs $B_{n+1}$ liegenden Ringbereich $R_{n+1,n}$ in Richtung des Füllstandsmessgeräts zurück reflektiert wurden. Entsprechend weisen die Differenzen $\Delta_{n+1,n}$ jeweils ein auf eine Reflektion an der Füllgutoberfläche zurückzuführendes Maximum $M_{n+1,n}$ auf. Die Laufzeit $t_{\Delta n+1,n}$ bei der dieses Maximum $M_{n+1,n}$ auftritt, entspricht der mittleren Entfernung $d_{n+1,n}$ in der sich die Schüttkegelinnenfläche in dem zugehörigen äußeren Ringbereich $R_{n+1,n}$ vom Füllstandsmessgerät 5 befindet.

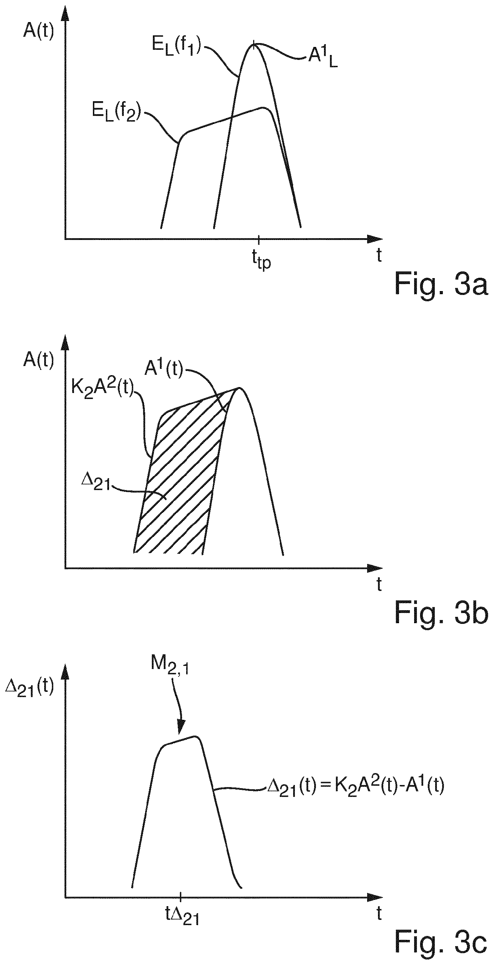

Fig. 3a zeigt hierzu exemplarisch die bei der höchsten Mittenfrequenz $f_1$ und die bei der nächstniedrigeren Mittenfrequenz $f_2$ aufgezeichneten Messkurven $A_1(t)$, $A_2(t)$ im Laufzeitbereich der auf die Reflektion an der Füllgutoberfläche zurückzuführenden Maxima $E_L(f_1)$, $E_L(f_2)$.

Bei der mit der höchsten Mittenfrequenz $f_1$ ausgeführten Messung wird nur ein kleiner Bereich B1 der Kegelspitze ausgeleuchtet. Folglich entspricht die Laufzeit $t_{tip}$, bei der das auf die Reflektion am Füllgut 3 zurückzuführende Maximum $E_L(f_1)$ seine Maximalamplitude $A^1_L$ aufweist, der Entfernung $d_1$ der Kegelspitze vom Füllstandsmessgerät 5. Hieraus ergibt sich anhand der Einbauhöhe des Füllstandsmessgeräts 5 über dem Behälter 1 unmittelbar die Füllhöhe $L_1$ des Füllguts 21 in einem Abstand von $x_1=0$ von der Achse der Hauptsenderichtung N bzw. der damit zusammenfallenden Kegellängsachse.

Bei der mit der nächst niedrigeren Mittenfrequenz $f_2$ abgeleiteten Messkurve wird ein geringfügig größerer Bereich B2 des Schüttkegels 23 ausgeleuchtet, der den Bereich B1 der Kegelspitze mit umfasst. Die Differenz $\Delta_{21}$ der beiden normierten und skalierten Messkurven $A^1(t)$, $A^2(t)$ enthält somit Informationen über den äußeren Ringbereich $R_{21}$ des Bereichs B2, der den Bereich B1 außenseitlich konzentrisch umschließt.

Die Normierung kann beispielsweise auf die in Fig. 3b dargestellte Weise vorgenommen werden, indem die logarithmierten Amplituden A aller bei niedrigeren Mittenfrequenzen $f_n$ aufgezeichneten Messkurven jeweils mit einem Faktor $k_n$ multipliziert werden, der derart vorgegeben wird, dass die Maximalamplitude $A^n_L$ dieser Messkurven wertmäßig gleich der entsprechenden Maximalamplitude $A^1_L$ der mit der höchsten eingesetzten Mittenfrequenz $f_1$ aufgezeichneten Messkurve $A^1(t)$ sind. Fig. 3b zeig hierzu die mit der höchsten Mittenfrequenz $f_1$ aufgezeichnete Messkurve $A^1(t)$ und die entsprechend normierte mit der nächstniedrigeren Mittenfrequenz $f_2$ aufgezeichnete Messkurve $k_2 A^2(t)$ in logarithmischer Darstellung.

Fig. 3c zeigt die Differenz $\Delta_{21}$ der beiden normierten logarithmierten Messkurven. Im einfachsten Fall wird nun die Laufzeit $t_{\Delta 21}$ des Maximums $M_{21}$ der Differenz $\Delta_{21}$ bestimmt und einer mittleren Entfernung $d_{21}$ des den Bereich B1 konzentrisch umgebenden äußeren Ringbereichs $R_{21}$ des Bereichs B2 vom Füllstandsmessgerät 5 zugeordnet.

Auf die gleiche Weise werden die Differenzen $\Delta_{n+1,n}$ aller weiteren frequenzmäßig benachbarten nor-

mierten logarithmierten Messkurven $A^n(t)$ gebildet, und die Laufzeiten $t_{\Delta n+1,n}$ der Maxima $M_{n+1,n}$ dieser Differenzen $\Delta_{n+1,n}$ bestimmt und der mittleren Entfernung $d_{n+1,n}$ des den jeweils kleineren Bereich $B_n$ konzentrisch umgebenden äußeren Ringbereichs $R_{n+1,n}$ des größeren Bereichs $B_{n+1}$ vom Füllstandsmessgerät 5 zugeordnet.

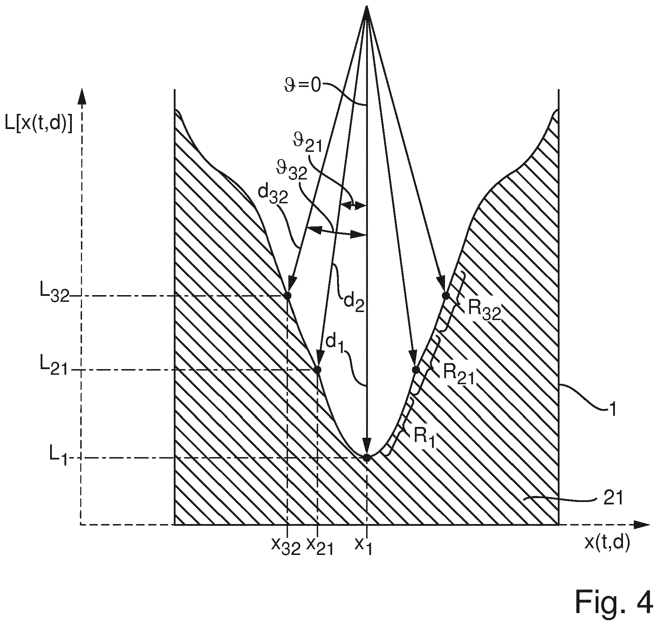

Anhand der Frequenzabhängigkeit der Öffnungswinkel $\alpha_n$ der Hauptkeulen unter denen die Sendesignale $S_n$ ausgesendet wurden, kann jedem Ringbereich $R_{n+1,n}$ ein mittlerer auf die Achse der Hauptsenderichtung N bezogener Sendewinkel $\vartheta_{n+1,n}$ zugeordnet werden, unter dem die zugehörigen Sendesignale $S_n$ von der Antenne 9 auf diesen Ringbereich $R_{n+1,n}$ gesendet werden. Anhand der mittleren Entfernungen $d_{n+1,n}$ und den zugehörigen mittleren Sendewinkeln $\vartheta_{n+1,n}$ kann nun ein Profil des Schüttkegels 23 abgeleitet werden. Dies ist in Fig. 4 schematisch dargestellt. Das Profil kann beispielsweise in Form von einzelnen Messpunkten $L_1$, $L_{n+1,n}$ wiedergegeben werden, die die anhand des jeweiligen Sendewinkels $\vartheta_{n+1,n}$, der anhand der Laufzeiten $t_{\Delta n+1,n}$ abgeleiteten Entfernungen $d_{n+1,n}$ und der Einbauhöhe der Antenne 9 relativ zum Behälter 1 bestimmten Füllhöhen $L_{n+1,n}$ in Abhängigkeit vom jeweiligen horizontalen Abstand $x_{n+1,n}$ von der Kegelachse wiedergeben.

Für den mit der höchsten Mittenfrequenz $f_1$ aufgenommen Messpunkt $L_1$ ergibt sich ein horizontaler Abstand $x_1$ von Null, und die Füllhöhe L1 entspricht der Differenz aus der Einbauhöhe des Füllstandsmessgeräts 5 und der anhand der Laufzeit $t_{tip}$ bestimmten Entfernung $d_1$.

Für alle übrigen anhand der Differenzen $\Delta_{n+1,n}$ von mit jeweils bei benachbarten Mittenfrequenzen $f_{n+1}$, $f_n$ aufgenommenen Messkurven $A^{n+1}(t)$, $A_n(t)$ abgeleiteten Messpunkte $L_{n+1,n}$ ist der horizontale Abstand $x_{n+1,n}$ jeweils durch das Produkt des Sinus des zugehörigen mittleren Sendewinkels $\vartheta_{n+1,n}$ und der aus der Laufzeit $t_{n+1,n}$ des Maximums $M_{n+1,n}$ der Differenz $\Delta_{n+1,n}$ abgeleiteten Entfernungen $d_{n+1,n}$ gegeben.

$$x_{n+1,n} = \sin(\vartheta_{n+1,n})\, d_{n+1,n}$$

Die zugehörigen Füllhöhen $L_{n+1,n}$ sind gleich der Differenz aus der Einbauhöhe H des Füllstandsmessgeräts 5 und dem Produkt aus dem Cosinus des zugehörigen mittleren Sendewinkels $\vartheta_{n+1,n}$ und der aus der Laufzeit $t_{n+1,n}$ des Maximums $M_{n+1,n}$ der Differenz $\Delta_{n+1,n}$ abgeleiteten Entfernungen $d_{n+1,n}$.

$$L_{n+1,n} = H - \cos(\vartheta_{n+1,n})\, d_{n+1,n}$$

Über die durch die Füllhöhen $L_{n+1,n}$ und die jeweils zugehörigen Abstände $x_{n+1}$ von der Achse der Hauptsenderichtung N, bei denen sie auftreten, gegebenen Messpunkte ist bereits ein grobes Profil des Verlaufs der Füllguthöhe im Behälter 1 gegeben. Vorzugsweise werden die gewonnen Messpunkte einer weiteren Aufbereitung, insb. durch Interpolation, Filterung, Glättung, und/oder Kurvenfits, unterzogen, an deren Abschluss ein die Füllhöhe $(L(x))$ als Funktion des Abstands $(x)$ wiedergebendes Profil steht.

Vorzugsweise wird das gewonnene - grobe oder kontinuierliche - Profil auf das Vorliegen von Knicken oder Sprüngen der Füllhöhe L als Funktion des Abstands x untersucht.

Ein Knick oder Sprung entsteht zum Beispiel, wenn ein Störer seitlich in den Behälter 1 hineinragt, und somit bei den bei niedrigeren Mittenfrequenzen $f_n$ ausgeführten Messungen einen Signalanteil des jeweiligen Sendesignals $S_n$ reflektiert. Da Schüttgüter regelmäßig kontinuierliche Oberflächenprofile ausbilden, ist ein Knick oder Sprung regelmäßig ein zuverlässiges Indiz für das Vorhandensein eines Störers. Entsprechend kann eine diesbezügliche Korrektur des erhaltenen Profils vorgenommen werden, indem der Knick oder Sprung beispielsweise durch numerische Verfahren, insb. Interpolation, Glättung oder Funktionenfits mit einer höheren Gewichtung von außerhalb des Knick- oder Sprungbereichs liegenden Messpunkten, entfernt wird. Diese Korrektur ist insb. dann von besonderem Vorteil, wenn nachfolgend anhand des Profils ein im Behälter 1 befindliches Volumen des Füllguts 21 berechnet werden soll.

Die oben beschriebenen Verfahren sind völlig analog auch in Anwendungen einsetzbar, bei denen sich anstelle des hier dargestellten talförmigen Schüttkegels ein bergförmiger Schüttkegel ausbildet, dessen Längsachse mit der Achse der Hauptsenderichtung N übereinstimmt. Solange die Längsachse des Schüttkegels mit der der Achse N der Hauptsenderichtung übereinstimmt, ist das Füllstandsmessgerät 5 anhand der auf die oben beschriebene Weise bestimmten richtungsabhängigen Entfernungen d der Kegeloberfläche zum Füllstandsmessgerät 5 in der Lage selbsttätig zu erkennen, ob der vorliegende Schüttkegel berg- und talförmig ist. Bei talförmigen Schüttkegeln nimmt die Entfernung mit ansteigendem Winkel der jeweiligen Senderichtung zur Hauptsendeachse N ab, während sie bei bergförmigen Schüttkegeln zunimmt.

Darüber hinaus sind sie natürlich völlig analog auch in anderen Anwendungen einsetzbar, in denen das Füllgut ein im Wesentlichen rotationssymmetrisch zur Achse der Hauptsenderichtung N verlaufende Oberfläche ausbildet.

In Anwendungen, in denen das Füllgut keine im Wesentlichen rotationssymmetrisch zur Achse der Hauptsenderichtung N verlaufende Oberfläche ausbildet werden vorzugsweise Pulsradar-Füllstandsmessgeräte 25 eingesetzt, die eine Antenne 27 aufweisen, die die oben beschriebenen Sendesignale $S_n$ jeweils mit einer von deren Mittenfrequenz $f_n$ abhängigen für unterschiedliche Mittenfrequenzen $f_n$ verschiedenen räumlichen Abstrahlcharakteristik aussendet, die eine Hauptsendekeule umfasst, deren räumliche Ausrichtung von der Mittenfrequenz $f_n$ der Sendesignale $S_n$ abhängig ist und für

unterschiedliche Mittenfrequenzen $f_n$ verschieden ist.

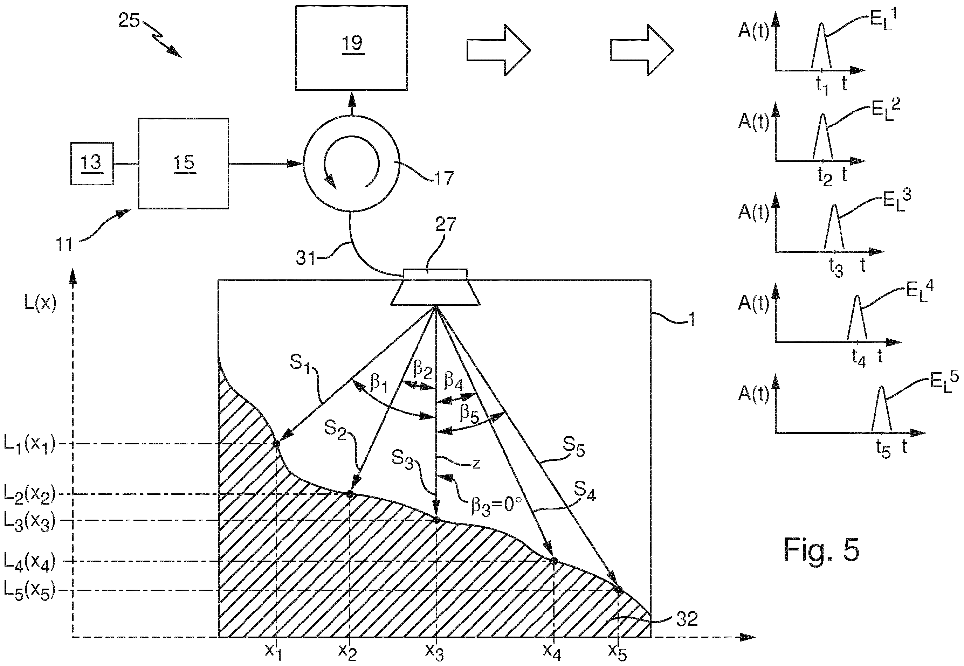

Fig. 5 zeigt eine mit einem solchen Füllstandsmessgerät 25 ausgestattete Füllstandsmessanordnung, bei der sich im Behälter 1 unter der Antenne 27 ein Füllgut 32 befindet, dass einen seitlich ins Sichtfeld Antenne 27 hineinragenden Berg ausbildet.

Das Füllstandsmessgerät 25 kann abgesehen von der Antenne 27 und den nachfolgend im Detail beschriebenen sich aus der Abstrahlcharakteristik der Antenne 27 ergebenden Unterschieden grundsätzlich den gleichen Aufbau aufweisen, wie die in den Fig. 1 und 2 dargestellten Füllstandsmessgeräte 5. Damit weist auch das Füllstandsmessgerät 25 eine Sendeeinrichtung 11 auf, die eine an eine Steuerung 13 angeschlossene Pulserzeugungseinrichtung 15 umfasst, die derart ausgestaltet ist, dass sie im Messbetrieb gemäß einem vorgegebenen mehrere Messungen umfassenden Messzyklus die oben beschriebenen Sendesignale $S_n$ aus Mikrowellen der für die jeweilige Messung vorgegebenen Mittenfrequenz $f_n$ erzeugt. Dabei liegen die Mittenfrequenzen $f_n$ auch hier vorzugsweise in den oben in Verbindung mit den zuvor beschriebenen Ausführungsbeispielen als bevorzugt genannten Frequenzbereichen.

Auch hier werden wieder Messzyklen durchgeführt, die mindestens zwei Messungen umfassen, bei denen die Mittenfrequenz $f_n$ der Mikrowellenpulse der zugehörigen Sendesignale $S_n$ verschieden sind. Die Sendesignale $S_n$ werden auch hier über eine an die Sendeeinrichtung 11 angeschlossene Sende-/Empfangsweiche 17 zur Antenne 27 übertragen, und deren im Behälter 1 in Richtung der Antenne 27 zurückreflektierten Signalanteile über die Sende-/Empfangsweiche 17 einer Empfangs- und Auswerteinheit 19 zugeführt, die anhand der Empfangssignale $R_n$ jeweils eine Messkurve $A_n(t)$ ableitet, die die Amplitude des Empfangssignale $R_n$ als Funktion der Laufzeit t wiedergibt.

Um auch hier eine Vergleichbarkeit der in den einzelnen Messungen der Messzyklen abgeleiteten Messkurven $A_n(t)$ zu erzielen, werden die Amplituden A der Messkurven $A_n(t)$ auch hier der oben beschriebenen Normierung unterzogen, und die Messkurven $A_n(t)$ erforderlichenfalls durch nachgeschaltete Skalierungen auf die gleiche Zeitskala bezogen. Die Antenne 27 ist vorzugsweise eine entsprechend ausgebildete Hohlleiter-Schlitzantenne. Hohlleiter-Schlitzantennen sind aus dem Stand der Technik bekannt. Hohlleiter-Schlitzantennen werden verwendet, die derart ausgestaltet sind, dass sie Abstrahlcharakteristiken mit einer oder zwei dominanten Hauptkeulen aufweisen, deren räumliche Ausrichtung von der Mittenfrequenz $f_n$ des jeweils gesendeten Sendesignals $S_n$ abhängig und für unterschiedliche Mittenfrequenzen $f_n$ verschieden ist.

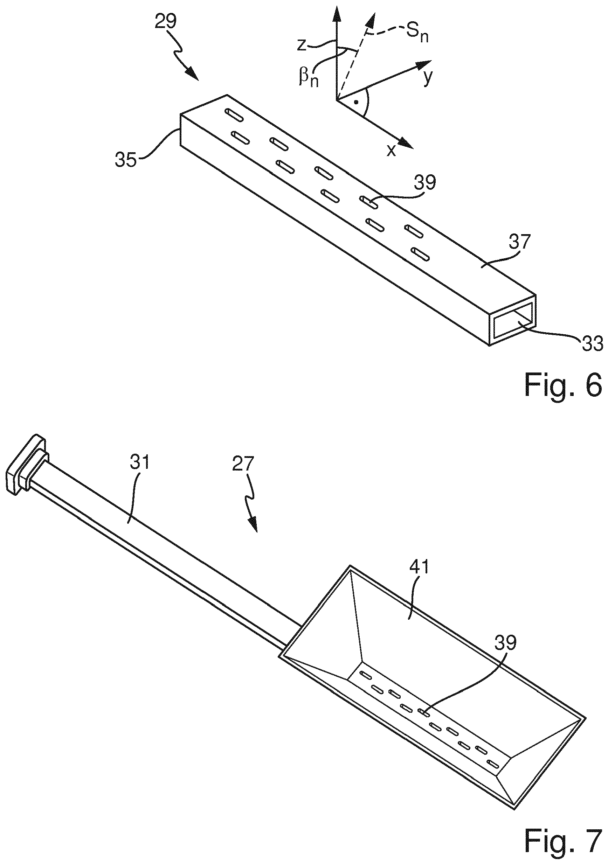

Hierzu eignet sich insb. eine Hohlleiter-Schlitzantenne, die einen in Fig. 6 dargestellten stabförmigen Rechteck-Hohlleiter 29 umfasst. Der Rechteck-Hohlleiter 29 weist einen über eine Speiseleitung 31 von der Sendeeinrichtung 11 gespeisten Eingang 33 auf. Das dem Eingang 33 gegenüberliegende Ende 35 des Rechteck-Hohlleiters 29 ist wahlweise entweder endseitig kurzgeschlossen, offen, oder mit einem reflexionsfreien Abschluss abgeschlossen.

Der Reckteck-Hohlleiter 29 weist eine rechteckförmige äußere Hohlleiterwand 37 auf, die mit schlitzförmigen, schlitzähnlichen oder fraktalförmigen Ausnehmungen 39 versehen ist, über die die Antenne 27 die eingespeisten Sendesignale $S_n$ mit einer von der Positionierung und Dimensionierung der Ausnehmungen 39 und den Mittenfrequenzen $f_n$ der eingespeisten Sendesignale $S_n$ abhängigen räumlichen Ausgangsabstrahlcharakteristik sendet.

Die Antenne 27 wird derart oben auf dem Behälter 1 montiert, dass eine Flächennormale Z auf die Außenseite der Hohlleiterwand 37 in den Behälter 1 in Richtung des Füllguts 32 weist.

Bauformbedingt weist die Abstrahlcharakteristik der Antenne 27 parallel zur Längsachse des Rechteck-Hohlleiters 29 eine stärkere Bündelung auf als senkrecht dazu. Die Raumrichtung parallel zur Längsachse des Rechteck-Hohlleiters 29 ist nachfolgend mit X, die senkrecht dazu verlaufende Raumrichtung mit Y bezeichnet.

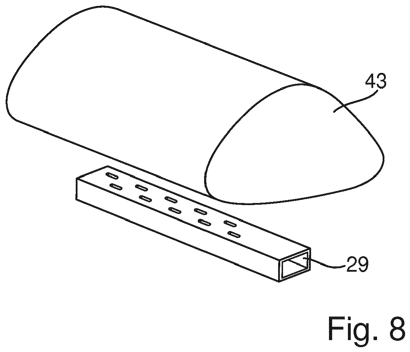

Zur zusätzlichen Bündelung der von der Antenne 27 in Richtung des Füllguts 32 gesendeten Sendesignale $S_n$ in Raumrichtung Y ist die Antenne 27 vorzugsweise mit einer auf der in Richtung des Behälterinnenraums ausgerichteten Außenseite der Hohlleiterwand 37 angeordneten Bündelungsvorrichtung ausgestattet. Fig. 7 und 8 zeigen jeweils ein Ausführungsbeispiel hierzu. In dem in Fig. 7 gezeigten Ausführungsbeispiel ist die Bündelungsvorrichtung ein alle Ausnehmungen 39 umschließendes Hohlleitersegment 41, das die Form eines sich in Richtung des Behälters 1 gleichmäßig aufweitenden rechteckigen Trichters aufweist. Alternativ kann auch ein rechteckförmiges Hohlleitersegment eingesetzt werden. Durch diese Hohlleitersegmente 41 wird zugleich auch eine zusätzliche Bündelung in Raumrichtung X erzielt.

Alternativ oder zusätzlich hierzu kann als einzige bzw. zusätzliche Bündelungsvorrichtung eine auf oder über der Hohlleiterwand 37 angeordnete Linse vorgesehen sein. Fig. 8 zeigt ein Ausführungsbeispiel hierzu, bei dem über dem Rechteck-Hohlleiter 29 eine dielektrische Linse 43 vorgesehen ist.

Eine weitere hier nicht dargestellte Ausführungsform einer einsetzbarer Bündelungsvorrichtung bilden außen auf den Ausnehmungen 39 aufgebrachte Platten aus einer oder mehreren planaren Lagen eines dielektrischen Materials.

Alternativ kann auch eine magnetische Linse eingesetzt werden, die eine in Richtung der nach außen weisenden Flächennormalen Z vor dem Rechteck-Hohlleiter 29 angeordnete Vorrichtung zur Erzeugung eines entsprechenden die Bündelung bewirkenden magnetischen Feldes umfasst.

Alternativ kann die Bündelungsvorrichtung auch weitere identisch zu dem Rechteck-Hohlleiter 29 ausgebildete Rechteck-Hohlleiter umfassen, die mit dem Rechteck-Hohlleiter 29 zu einer Gruppe parallel amplituden- und phasengleich gespeister, und parallel zueinander und senkrecht zur Längsachse des Rechteck-Hohlleiters 29 unmittelbar nebeneinander angeordneter Rechteck-Hohlleiter zusammengeschaltet sind.

Zur Erzielung einer mittenfrequenzabhängigen Ausrichtung der Hauptkeulen der Antenne 27 ist der Rechteck-Hohlleiter 29 vorzugsweise mit zwei Reihen von jeweils auf einer parallel zur mittig auf der Hohlleiterwand 37 verlaufenden Längsachse des Rechteck-Hohlleiters 29 verlaufenden Geraden hintereinander angeordneten Ausnehmungen 39 ausgestattet. Beide Reihen verlaufen im gleichen Abstand $\Delta y$ zur Mitte der Hohlleiterwand 37.

Ein Beispiel einer solchen für den Betrieb bei einer fest vorgegebenen Frequenz ausgelegten Hohlleiter-Schlitzantennen für eine einzige Frequenz ist in dem in dem Artikel ‚'Integrated waveguide slot antennas' der Autoren A.J. Farrall und P.R. Young, der am 5. August 2004 in der Ausgabe Vol. 40, No. 16 der Zeitschrift ELECTRONICS LETTERS beschrieben.

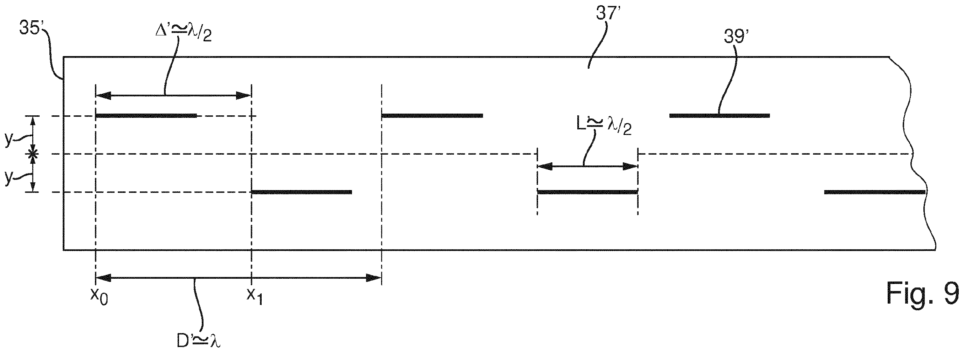

Fig. 9 zeigt zur Erläuterung ein Auslegungsbeispiel für eine einzige vorgegebene zu sendende Frequenz f. Elektromagnetische Wellen dieser Frequenz f bilden in dem Rechteck-Hohlleiter 29' eine von den Abmessungen des Rechteck-Hohlleiters 29' und dem darin befindlichen Medium abhängige Wellenlänge $\lambda$ aus. Ein für beide Reihen gleicher Abstand $\Delta Y$ der Reihen zur Mitte der Hohlleiterwand 37' wird vorzugsweise anhand der Ortsabhängigkeit der Shunt-Leitfähigkeit des Rechteck-Hohlleiters 29' in Y Richtung - also senkrecht zur Längsachse des Rechteck-Hohlleiters 29' - derart bestimmt, dass möglichst viel Leistung durch die Ausnehmungen 39' abgestrahlt wird. Das ist gleichbedeutend damit, dass sich die im Rechteck-Hohleiter 29' ausbildenden Wellen im Ausnehmungsbereich einen Wellenberg ausbilden.

In jeder der beiden Reihen sind die einzelnen Ausnehmungen 39' periodisch in einem Abstand D von einer Wellenlänge $\lambda$ hintereinander angeordnet, und die Ausnehmungen 39' der beiden Reihen sind gegeneinander in Längsrichtung des Rechteck-Hohlleiters 29' um einen Versatz $\Delta'$ von einer halben Wellenlänge $\lambda/2$ versetzt angeordnet. Dabei ist die zu dem der Einspeisung 33 gegenüberliegenden offenen, kurzgeschlossenen oder reflexionsfrei abgeschlossenen Ende 35' des Rechteck-Hohlleiters 29' nächstliegende Ausnehmung 39' der einen Reihe um einem in Abhängigkeit von der Art des Abschlusses bestimmten Abstand $x_0$ vom Ende 35' des Rechteck-Hohlleiters 29' beabstandet. Der Abstand $x_0$ beträgt bei offenem Ende 35' vorzugsweise eine halbe Wellenlänge, d.h. $x_0 = \lambda/2$. Bei kurzgeschlossenem Ende 35' beträgt der Abstand $x_0$ vorzugsweise eine viertel Wellenlänge, d.h. $x_0 = \lambda/4$, Bei reflexionsfreiem Abschluss des Endes 35' kann ein beliebiger Abstand $x_0$ vorgegeben werden, da hier am reflexionsfrei abgeschlossenen Ende 35' keine Reflexion der eingespeisten Sendesignale $S_n$ auftritt. Kann der Abschluss technisch nicht ausreichend reflexionsfrei ausgestaltet werden, ist die Art der Reflexion von der Bauart des Abschlusses abhängig und die Länge $x_0$ kann darauf beispielsweise durch Berechnung oder numerische Simulation abgestimmt werden.

Aufgrund des Versatzes $\Delta'$ der beiden Reihen um eine halbe Wellenlänge $\lambda/2$ ist der entsprechende Abstand $x_1$ des Ende 35' des Rechteck-Hohlleiters 29' zur dazu nächstliegenden Ausnehmung 39' der anderen Reihe gleich der Summe aus dem Abstand $x_0$ und dem Versatz $\Delta'$. Bei offenem Ende 35' beträgt der Abstand $x_1$ somit eine Dreiviertelwellenlänge $3/4\ \lambda$. Alle Ausnehmungen weisen die gleiche Länge L' auf, die in der Größenordnung einer halben Wellenlänge $\lambda/2$ liegt, und zur Vermeidung einer Überlappung der Ausnehmungen 39' in Längsrichtung des Rechteck-Hohlleiters 29' echt kleiner als der Versatz $\Delta'$ ist.

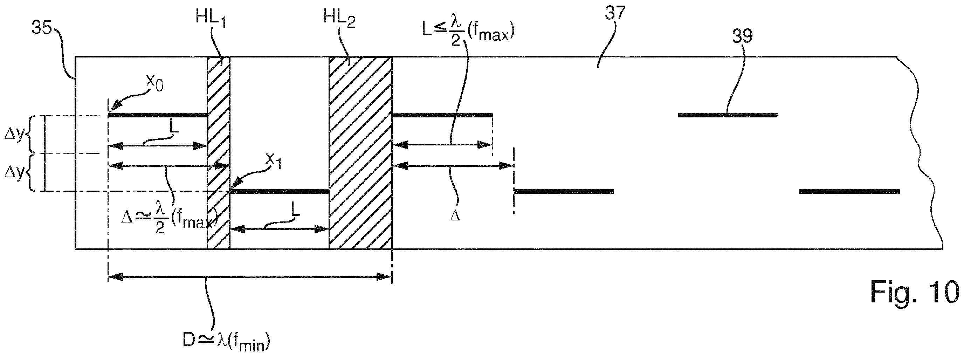

Die Positionierung und Dimensionierung der Ausnehmungen 39 der Antenne 27 zum Senden oder zum Senden und Empfangen von Signalen unterschiedlicher Mittenfrequenz ist in Fig. 10 dargestellt. Sie erfolgt auf der Basis der zuvor beschriebenen der Dimensionierung und Positionierung der Ausnehmungen für eine einzige Frequenz f, unter Berücksichtigung des einzusetzenden durch eine untere Grenzfrequenz $f_{min}$ und eine obere Grenzfrequenz $f_{max}$ begrenzten Spektrums der Mittenfrequenzen $f_n$.

Auch die Hohlleiter-Schlitzantenne 27 weist zwei parallel zu beiden Seiten der Längsachse des Rechteck-Hohlleiters 29 verlaufende Reihen von Ausnehmungen 39 gleicher Länge L auf.

Der Abstand $\Delta Y$ der beiden Reihen zur Mitte der Hohlleiterwand 37 wird auch hier anhand der Ortsabhängigkeit der Shunt-Leitfähigkeit in dieser Richtung Y - also senkrecht zur Längsachse des Rechteck-Hohlleiters - derart bestimmt, dass möglichst viel Leistung durch die Ausnehmungen 39 abgestrahlt wird.

Beide Reihen sind bezüglich der Form und der Abstände der darin aufeinander folgenden Ausnehmungen 39 identisch, aber gegeneinander in Längsrichtung des Rechteck-Hohlleiters 29 um einen Versatz $\Delta$ versetzt, der in der Größenordnung der Hälfte der sich bei der oberen Grenzfrequenz $f_{max}$ im Rechteck-Hohlleiter 29 ausbildenden Wellenlänge $\lambda(f_{max})$ liegt, d.h. $\Delta \approx \frac{1}{2}\ \lambda(f_{max})$. Beginnt die zu dem der Speiseleitung 31 gegenüberliegenden Ende 35 des Rechteck-Hohlleiters 29 nächstliegende erste Ausnehmung 39 der einen Reihe in einem

Abstand $x_0$ von diesem Ende 35, so beginnt die dem Ende des Rechteck-Hohlleiters 29 nächstliegende erste Ausnehmung 39 der anderen Reihe in einem Abstand $x_1$ vom Ende, der gleich der Summe aus dem Abstand $x_0$ und dem Versatz $\Delta$ ist. Der Abstand $x_0$ ist auch hier in Abhängigkeit von der Wahl des Abschlusses des Endes 35 zu bestimmen. Vorzugsweise liegt der Abstand $x_0$ bei kurzgeschlossenem Ende 35 in der Größenordnung von einem Viertel der sich bei der unteren Grenzfrequenz $f_{min}$ ausbildenden Wellenlänge $A(f_{min})$, d.h.

$x_0 \approx 1/4\ \lambda(f_{min})$. Bei offenem Ende 35 liegt er vorzugsweise in der Größenordnung der Hälfte der sich bei der unteren Grenzfrequenz $f_{min}$ im Rechteck-Hohlleiter 29 ausbildenden Wellenlänge $\lambda(f_{min})$; d.h. $x_0 \approx 1/2\ \lambda(f_{min})$ der. Bei reflexionsfreiem Abschluss des Endes 35 kann der Abstand $x_0$ beliebig gewählt werden. Kann der Abschluss technisch nicht ausreichend reflexionsfrei ausgestaltet werden, ist die Art der Reflexion von der Bauart des Abschlusses abhängig und die Länge $x_0$ kann darauf beispielsweise durch Berechnung oder numerische Simulation darauf abgestimmt werden.

In jeder Reihe folgen die Ausnehmungen 39 periodisch in einem Periodenabstand D aufeinander, der in der Größenordnung der sich bei der unteren Grenzfrequenz $f_{min}$ ausbildenden Wellenlänge $\lambda(f_{min})$ liegt.

$$D \approx \lambda(f_{min})$$

Die Länge L der Ausnehmungen 39 liegt in der Größenordnung der Hälfte der sich bei der oberen Grenzfrequenz $f_{max}$ im Rechteck-Hohlleiter 29 ausbildenden Wellenlänge $\lambda(f_{max})$ und ist echt kleiner als der Versatz $\Delta$.

$$L \approx \lambda(f_{max})/2 < \Delta$$

Vorzugsweise wird für die Länge L in Abhängigkeit von den gegeben Fertigungstoleranzen ein Maximalwert vorgegeben, bei dem trotz der Fertigungstoleranzen noch sichergestellt ist, dass die Länge L echt kleiner als der Versatz $\Delta$ ist. Hierdurch wird erreicht, dass Ausnehmungen 39 der einen Reihe in Längsrichtung nicht mit der jeweils darauf folgenden Ausnehmung 39 der anderen Reihe überlappen.

Die genauen Werte für die Länge L der Ausnehmungen 39, die Periodendistanz D, Versatz $\Delta$ und die Abstände $x_0$, $x_1$ vom Ende 35 werden vorzugsweise durch eine anhand von numerischen Simulationsrechnungen durchgeführte Optimierung bestimmt, die vorzugsweise auch einen durch die unterschiedlichen Signalausbreitungsgeschwindigkeiten innerhalb und außerhalb des Rechteck-Hohlleiters 39 bedingten minimalen Phasenversatz berücksichtigt.

Während der Versatz $\Delta$ erfindungsgemäß auf der Basis der kürzeren Wellenlänge $\lambda(f_{max})$ der oberen Grenzfrequenz $f_{max}$ bestimmt wird, wird die Periodendistanz D erfindungsgemäß auf der Basis der längeren Wellenlänge $\lambda(f_{min})$ der unteren Grenzfrequenz $f_{min}$ bestimmt. Dementsprechend ist ein darüber hinaus von der Länge L der Ausnehmungen 39 abhängiges sich an das Ausnehmungsende der jeweils ersten von zwei um den Versatz $\Delta$ gegeneinander versetzten Ausnehmungen 39 der beiden Reihen anschließendes ausnehmungsfreies Hohlleitersegment HL1 kürzer als ein sich an das Ausnehmungsende der jeweils zweiten der beiden um den Versatz $\Delta$ gegeneinander versetzten Ausnehmungen 39 der beiden Reihen anschließendes ausnehmungsfreies Hohlleitersegment HL2. Zur Veranschaulichung ist in Fig. 10 jeweils eins der kürzeren Hohlleitersegmente HL1 und eines der längeren Hohlleitersegmente HL2 durch eine Schraffur hervorgehoben.

Damit ist die Periodendistanz D für Sendesignale $S_n$, deren Mittenfrequenz $f_n$ nahe der unteren Grenzfrequenz $f_{min}$ liegen, gut angepasst, während die Länge L der Ausnehmungen 39 hierfür etwas zu gering ist, und sich in Längsrichtung gesehen jede zweite Ausnehmung 39 an der falschen Stelle befindet. Dies bewirkt bei kurzgeschlossenem oder offenem Abschluss des Endes 35 zwei Hauptkeulen, mit einer von der Flächennormale Z um einen mittenfrequenzabhängigen Winkel $\beta_n$ abweichenden Ausrichtung. Bei reflexionsfreiem Abschluss des Endes 35 bildet sich nur Hauptkeule, mit einer von der Flächennormale Z um einen mittenfrequenzabhängigen Winkel $\beta_n$ abweichenden Ausrichtung aus.

Für Sendesignal $S_n$, deren Mittenfrequenz $f_n$ nahe der oberen Grenzfrequenz $f_{max}$ liegt, ist dagegen der Versatz $\Delta$ gut angepasst. Darüber hinaus bewirkt das längere sich an das Ausnehmungsende des jeweils zweiten von zwei um den Versatz $\Delta$ gegeneinander versetzten Ausnehmungen 39 der beiden Reihen anschließende ausnehmungsfreie Hohlleitersegment HL2, sowie der Betrag um den die Länge L der Ausnehmungen 39 die für die jeweilige Mittenfrequenz $f_n$ optimal angepasste Länge unterschreitet, in diesem Bereich sowohl innerhalb des Rechteck-Hohlleiters 29 als auch bei der Bildung der abstrahlenden Wellenfront einen Phasenweitergang, so dass eine Bündelung der abgestrahlten Wellenfront in einer einzigen parallel zur Flächennormalen Z ausgerichteten Hauptkeule erfolgt.

Bei einer Antenne 27 mit einem Rechteck-Hohlleiter 29 mit reflexionsfrei abgeschlossenem Ende 35 wird ein Teil der eingespeisten Sendesignale $S_n$ über die Ausnehmungen 39 in Richtung des Füllguts 33 gesendet. Bei der oben beschriebenen Dimensionierung und Positionierung der Ausnehmungen 39 weist die Antenne 27 in diesem Fall eine Abstrahlcharakteristik mit einer einzigen dominanten Hauptkeule auf, die sich unter einem von der Mittenfrequenz $f_n$ der Mikrowellenpulse des jeweils gesendeten Sendesignals $S_n$ abhängen Winkel $\beta_n$ relativ zur Flächennormale Z in der durch die Flächennormale Z und die Raumrichtung Y aufgespannten Ebene ausbildet.

Diese Ausführungsform, die nicht Teil der Erfindund ist, mit reflexionsfrei abgeschlossenem Rechteck-Hohlleiter 29 wurde bei dem in Fig. 5 dargestellten Ausführungsbeispiel eingesetzt. Dort sind die Ausrichtungen der einzelnen Hauptkeulen, sowie der Winkel $\beta_n$ unter dem sie sich zur Flächennormale Z ausbilden exemplarisch für fünf nacheinander bei unterschiedlichen Mittenfrequenzen $f_n$ ausgeführte Messungen dargestellt.

Bei jeder der nacheinander bei der zugehörigen Mittenfrequenz $f_n$ ausgeführten Messungen wird jeweils das aus Mikrowellenpulsen der für die jeweilige Messung mittels der Steuerung 13 vorgegebenen Mittenfrequenz

$f_n$ bestehende Sendesignal $S_n$ gesendet, dessen zugehöriges Empfangssignal $R_n$ empfangen, und anhand des Empfangssignals $R_n$ eine Messkurve $A_n(t)$ abgeleitet, die die Amplitude $A_n(t)$ des jeweiligen Empfangssignals $R_n$ als Funktion der zugehörigen Signallaufzeit $t$ wiedergibt. Auch hier werden die Messkurven $A_n(t)$ vorzugsweise auf die oben beschriebene Weise normiert und skaliert. Die nacheinander bei den unterschiedlichen Mittenfrequenzen $f_n$ abgeleiteten Messkurven $A_n(t)$ sind in Fig. 5 rechts neben der Empfangs- und Auswerteschaltung 19 dargestellt. In jeder dieser Messkurven $A_n(t)$ wird jeweils das darin enthaltene auf die Reflektion an der Füllgutoberfläche zurückzuführende ausgeprägte Maximum $E^n_L$ ermittelt, und die Laufzeit $t^n_L$ bei der es seine Maximalamplitude aufweist bestimmt. Die Laufzeiten $t^n_L$ entsprechen jeweils der Entfernung $d_n$ des Füllstandsmessgeräts 25 von der Füllgutoberfläche in Richtung der sich bei der jeweiligen Mittenfrequenz $f_n$ ausbildenden Ausrichtung der Hauptkeule der Abstrahlcharackteristik der Antenne 27.

Anhand der Laufzeiten $t^n_L$ dieser Maxima $E^n_L$, den Mittenfrequenzen $f_n$ der zugehörigen Sendesignale $S_n$ anhand derer die jeweilige Laufzeit $t^n_L$ bestimmt wurde, und den Winkeln $\beta_n$ unter denen die Hauptsendekeule bei den jeweiligen Mittenfrequenzen $f_n$ zur Flächennormale Z verläuft, kann nun ohne weiteres ein Profil der Füllgutoberfläche bestimmt wird.

Analog zu dem anhand von Fig. 2 beschriebenen Ausführungsbeispiel kann das Profil auch hier beispielsweise in Form von einzelnen Messpunkten $L_n(x_n(\beta_n, d_n(t_n))$ wiedergegeben werden, die die anhand des jeweiligen Winkels $\beta_n$, der anhand der Laufzeiten $t_n$ abgeleiteten Entfernungen $d_n$ und der Position und der Einbauhöhe der Antenne 27 relativ zum Behälter 1 bestimmten Füllhöhen $L_n$ in Abhängigkeit vom jeweiligen horizontalen Abstand $x_n$ von der Flächennormalen Z auf die Antenne 27 wiedergeben.

Auch hier kann anhand der oben in Verbindung mit der anhand von Fig. 2 und 4 beschriebenen Ausführungsform beschriebenen Weiterverarbeitung der Messpunkte $L_n(x_n(\beta_n, d_n(t_n))$, insb. durch Interpolation, Filterung, Glättung oder Funktionenfits ein kontinuierliches Profil der Füllgutoberfläche erstellt werden, das dann zur weiteren Auswertung und/oder Verarbeitung zur Verfügung steht. Das in Fig. 5 dargestellte Ausführungsbeispiel bietet den Vorteil, dass sie auch in Anwendungen eingesetzt werden kann, in denen vorab keine Angaben über die Geometrie der Füllgutoberfläche bekannt sind. Insb. ist sie auch dann einsetzbar, wenn das Füllgut - wie in dem in Fig. 5 dargestellten Ausführungsbeispiel - eine Oberflächengeometrie aufweist, die nicht symmetrisch zur Flächennormale Z verläuft.

Die mit einem endseitig reflexionsfrei abgeschlossenen Rechteck-Hohlleiter 29 ausgestattete Antenne 27 ist folglich nicht nur in Füllstandsmessanordnungen einsetzbar, in denen sich das Füllgut in einem geschlossenen Behälter befindet, sondern kann beispielsweise auch in Füllstandsmessanordnungen eingesetzt werden, bei denen der zu messende Füllstand ein sich senkrecht zur Laufrichtung eines Förderbandes auf dem Förderband ausbildendes Füllhöhenprofil ist.

Diese Ausführungsform des Füllstandsmessgeräts 25 kann selbstverständlich auch in Anwendungen mit planarer oder rotationssymmetrischer Füllgutoberfläche eingesetzt werden, in denen beispielsweise - wie in dem Anwendungsbeispiel von Fig. 1 gezeigt - seitliche in den Behälter 1 hineinragende Störer 7 vorhanden sind, oder in denen das Füllgut im Behälter 1 - wie in dem Anwendungsbeispiel von Fig. 2 gezeigt - einen vorzugsweise unmittelbar unter der Antenne 27 befindlichen Schüttkegel 23 ausbildet.

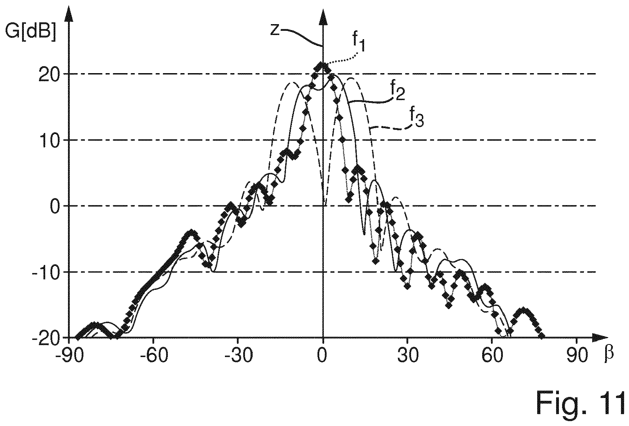

Erfindungsgemäß und alternativ zu dem anhand von Fig. 5 beschriebenen Beispiel einer Hohlleiter-Schlitzantenne mit offenem Ende 35 kann auch eine Hohlleiter-Schlitzantenne mit kurzgeschlossenem oder offenem Ende 35 verwendet werden. In beiden Fällen wird sowohl ein Teil des eingespeisten Sendesignale $S_n$ als auch ein Teil des an dem kurzgeschlossenen oder offenen Ende 35 zurückreflektierten Anteils des jeweiligen Sendesignals $S_n$ durch die Ausnehmungen 39 in Richtung des Füllguts gesendet. Der einzige Unterschied zwischen diesen beiden Varianten besteht darin, dass die Reflektion am offenen Ende 35 phasenverschoben gegenüber der durch einen Kurzschluss hervorgerufenen Reflektion auftritt. In beiden Fällen weist die Antenne 27 eine Abstrahlcharakteristik mit zwei Hauptkeulen auf, deren Senderichtungen zu beiden Seiten der Flächennormalen Z jeweils unter dem gleichen mittenfrequenzabhängigen Winkel $\beta'_n$ zur Flächennormale Z verlaufen, und lediglich bei einem mittenfrequenzabhängigen Winkel $\beta'= 0°$ von Null Grad zu einer einzigen Hauptkeule zusammenfallen. Fig. 11 zeigt als Beispiel hierzu ein Antennendiagramm einer Antenne 27 mit endseitig kurzgeschlossenem Rechteck-Hohlleiter 29. Hierzu ist in Fig. 11 deren Antennengewinn G in Abhängigkeit von der Senderichtung für Sendesignale $S_n$ drei verschiedener Mittenfrequenzen $f_n$ dargestellt. Die Senderichtung ist hier durch den Winkel $\beta'$ wiedergegeben, den die Senderichtung mit der Flächennormale Z auf die Hohlleiterwand 37 in der durch die Flächennormale Z und die Raumrichtung Y aufgespannten Ebene einschließt. Bei der höchsten dargestellten Mittenfrequenz $f_1$ ergibt sich eine einzige Hauptkeule die unter einem Winkel $\beta'$ von 0° zur Flächennormale Z verläuft. Bei der nächstniedrigeren dargestellten Mittenfrequenz $f_2$ bilden sich in der durch die Flächennormal Z und die Raumrichtung Y aufgespannten Ebene zwei symmetrisch zur Flächennormale Z unter einem Winkel $\beta'_2$ von ca. +/-7° zur Flächennormale Z verlaufende Hauptkeulen aus. Bei der niedrigsten dargestellten Mittenfrequenz $f_3$ bilden sich in der durch die Flächennormal Z und die Raumrichtung Y aufgespannten Ebene zwei symmetrisch zur Flächennormale Z unter einem Winkel $\beta'_3$ von ca. +/-15° zur Flächennormale Z verlaufende Hauptkeulen aus.

Aufgrund der Geometrie und der Symmetrie der sich ausbildenden Hauptkeulenpaare unterliegt auch diese Ausführungsform Beschränkungen hinsichtlich der Anwendungen. Diese entsprechen von Grundprinzip her den Beschränkungen, die für die anhand von Fig. 1 und 2 beschriebenen Ausführungsformen gelten.

Unterschiede bestehen lediglich insoweit, als sich die Hauptkeulen bei den in Fig. 1 und 2 gezeigten Ausführungsformen rotationssymmetrisch zur immer gleichbleibenden Hauptsenderichtung Z ausbilden, während sich die beiden Hauptkeulen einer endseitig offenen oder kurzgeschlossenen Hohlleiter-Schlitzantenne symmetrisch zu beiden Seiten der Flächennormale auf den Rechteck-Hohlleiter in einer Ebene ausbilden.

| | |
|---|---|
| 1 | Behälter |
| 3 | Füllgut |
| 5 | Füllstandsmessgerät |
| 7 | Störer |
| 9 | Antenne |
| 11 | Sendeeinrichtung |
| 13 | Steuerung |
| 15 | Pulserzeugungseinrichtung |
| 17 | Sende-/Empfangsweiche |
| 19 | Signalverarbeitungseinrichtung |
| 21 | Füllgut |
| 23 | Schüttkegel |
| 25 | Füllstandsmessgerät |
| 27 | Antenne |
| 29 | Rechteck-Hohleiter |
| 31 | Speiseleitung |
| 32 | Füllgut |
| 33 | Eingang |
| 35, 35' | Ende des Rechteck-Hohlleiters |
| 37, 37' | Hohleiterwand |
| 39, 39' | schlitzförmige Ausnehmung |
| 41 | Hohlleitersegment |
| 43 | Linse |

**Patentansprüche**

1. Nach dem Pulsradarprinzip arbeitendes Füllstandsmessgerät (5, 25) zur Messung eines Füllstands (L) eines Füllguts in einem Behälter (1), mit

- einer Sendeeinrichtung (11) mit einer an eine Steuerung (13) angeschlossenen Pulserzeugungseinrichtung (15),
-- die derart ausgebildet ist, dass sie gemäß vorgegebenen jeweils mindestens zwei Messungen umfassenden Messzyklen für jede Messung ein aus Mikrowellenpulsen einer für die jeweilige Messung vorgegebenen Mittenfrequenz ($f_n$) bestehendes Sendesignal ($S_n$) erzeugt, wobei die Mittenfrequenzen ($f_n$) der Sendesignale ($S_n$) von mindestens zwei der Messungen voneinander verschieden sind,
- einer an die Sendeeinrichtung (11) angeschlossenen Antenne (27)

-- die die Sendesignale ($S_n$) in den Behälter (1) sendet, und deren im Behälter (1) in Richtung der Antenne (27) zurück reflektierten Signalanteile nach einer von der Entfernung des zugehörigen Reflektors vom Füllstandsmessgerät (5, 25) abhängigen Laufzeit (t) als Empfangssignale ($R_n$) empfängt,
-- die eine von der Mittenfrequenz ($f_n$) der Sendesignale ($S_n$) abhängige für unterschiedliche Mittenfrequenzen ($f_n$) verschiedene räumliche Abstrahlcharakteristik aufweist, und
-- die eine Hohlleiter-Schlitzantenne ist, die derart ausgestaltet ist, dass die Abstrahlcharakteristik zwei dominante Hauptkeulen aufweist, deren räumliche Ausrichtung von der Mittenfrequenz ($f_n$) des jeweils gesendeten Sendesignals ($S_n$) abhängig und für unterschiedliche Mittenfrequenzen ($f_n$) verschieden ist, und deren Senderichtungen zu beiden Seiten der Flächennormalen (Z), die auf der Hohlleiterwand (37) der Antenne in den Behälter in Richtung des Füllguts läuft, jeweils unter dem gleichen mittenfrequenzabhängigen Winkel zur Flächennormale (Z) verlaufen, und

- einer an die Sendeeinrichtung (11) und die Antenne (27) angeschlossenen Signalverarbeitungseinrichtung (19),
-- die die Empfangssignale ($R_n$) empfängt und anhand der Mittenfrequenzen ($f_n$) der Mikrowellenpulse der zugehörigen Sendesignale ($S_n$) und der Mittenfrequenzabhängigkeit der räumlichen Abstrahlcharakteristik der Antenne (27) auswertet.

2. Füllstandsmessgerät nach Anspruch 1, bei dem die Antenne (27) eine Hohlleiter-Schlitzantenne mit einen stabförmigen Rechteck-Hohlleiter (29), ist,

- die einen von der Sendeeinrichtung (11) gespeisten Eingang (33) aufweist,
- deren dem Eingang (33) gegenüberliegendes Ende (35) endseitig offen ist, und
- die eine Hohlleiterwand (37) aufweist, die mit Ausnehmungen (39), insb. mit schlitzförmigen, schlitzähnlichen oder fraktalförmigen Ausnehmungen, versehen ist, über die die Antenne (27) die Sendesignale ($S_n$) mit einer von der Positionierung und Dimensionierung der Ausnehmungen (39) und den Mittenfrequenzen ($f_n$) der eingespeisten Sendesignale ($S_n$) abhängigen für unterschiedliche Mittenfrequenzen ($f_n$) verschiedenen räumlichen Abstrahlcharakteristik sendet.

3. Füllstandsmessgerät nach Anspruch 2, bei dem die Antenne (27) eine Bündelungsvorrichtung zur Bündelung der aus der Antenne (27) austretenden Sendesignale ($S_n$) umfasst, insb.

- ein außen auf der Hohlleiterwand (37) angeordnetes alle Ausnehmungen (39) umschließendes trichter- oder rechteckförmiges Hohlleitersegment (41),
- eine außen auf der Hohlleiterwand (37) angeordnete Linse, insb. eine dielektrische Linse (43) oder eine magnetische Linse,
- außen auf den Ausnehmungen (39) aufgebrachte Platten aus einer oder mehreren planaren Lagen eines dielektrischen Materials, oder
- weitere identisch zu dem Rechteck-Hohlleiter (29) ausgebildete Rechteck-Hohlleiter, die mit dem Rechteck-Hohlleiter (29) zu einer Gruppe parallel amplituden- und phasengleich gespeister, und parallel zueinander und senkrecht zur Längsachse des Rechteck-Hohlleiters (29) unmittelbar nebeneinander angeordneter Rechteck-Hohlleiter zusammengeschaltet sind.

4. Füllstandsmessgerät nach Anspruch 2, bei dem

- die Ausnehmungen (39) derart positioniert und dimensioniert sind, dass die Abstrahlcharakteristik der Antenne (27) bei kurzgeschlossenem oder offenem Ende (35) zwei symmetrisch zur Flächennormalen (Z) auf die Hohlleiterwand (37) verlaufende Hauptsendekeulen aufweist, und
- sich ein Winkel ($\beta_n$) unter dem sich die Hauptsendekeulen zur Flächennormalen (Z) auf die Hohlleiterwand (37) ausbilden mit der Mittenfrequenz ($f_n$) der Sendesignale ($S_n$) verändert.

5. Verfahren zur Messung eines Füllstands eines Füllguts in einem Behälter (1) mittels eines nach dem Pulsradarprinzip arbeitenden Füllstandsmessgeräts gemäß Anspruch 4 mit einer Antenne (27) mit endseitig offenem oder kurzgeschlossenem Rechteck-Hohlleiter (29) in Anwendungen in denen das Füllgut (21) in einer Sendeebene der Antenne (27) eine im Wesentlichen symmetrisch zur Flächennormale (Z) auf den Rechteck-Hohlleiter (29) verlaufende Füllgutoberfläche ausbildet, bei dem

- in einem Messzyklus Messungen mit Sendesignalen ($S_n$) verschiedener Mittenfrequenzen ($f_n$) ausgeführt werden, bei denen jeweils

-- ein Mikrowellenpulse einer für die jeweilige Messung vorgegebenen Mittenfrequenz ($f_n$) aufweisendes Sendesignal ($S_n$) gesendet,
-- dessen zugehöriges Empfangssignal ($R_n$) empfangen, und

-- anhand des Empfangssignals ($R_n$) jeweils eine Messkurve ($A^n(t)$) abgeleitet wird, die die Amplitude (A) des jeweiligen Empfangssignals ($R_n$) als Funktion der zugehörigen Signallaufzeit (t) wiedergibt,

- für jede Messkurve ($A^n(t)$) die Laufzeit ($t_n$) des darin enthaltenen auf eine Reflektion an der Füllgutoberfläche zurückzuführenden Maximums ($E^n_L$) bestimmt wird, und
- anhand dieser Laufzeiten ($t_n$), den Mittenfrequenzen ($f_n$) der zugehörigen Sendesignale ($S_n$) und den Winkeln ($\beta'_n$), den die sich bei der jeweiligen Mittenfrequenz ($f_n$) ausbildenden Hauptsendekeulen mit der Flächennormale (Z) einschließen, Füllhöhen ($L_n$) des Füllguts (32) im Behälter (1) in über die Laufzeiten ($t_n$) und den jeweils dazugehörigen Winkel ($\beta'_n$) bestimmten Abständen ($x_n$) von der Flächennormalen (Z) senkrecht zur Flächennormale (Z) bestimmt werden.

6. Verfahren nach Anspruch 5 bei dem anhand der durch die Füllhöhen ($L_{n+1,n}$; $L_n$) und die jeweils zugehörigen Abstände ($x_{n+1,n}$, $x_n$), bei denen sie auftreten, gegebenen Messpunkte, insb. durch Interpolation, Filterung, oder Glättung, ein Profil abgeleitet wird, dass die Füllhöhe (L(x)) als Funktion des Abstands (x) wiedergibt.

7. Verfahren nach Anspruch 6, bei dem das Profil auf Knicke oder Sprünge der Füllhöhe (L(x)) als Funktion des Abstands (x) untersucht wird.

8. Verfahren nach Anspruch 5 bei dem bei dem die Amplituden (A) der Messkurven ($A_n(t)$) einer Normierung unterzogen werden, die die von der Mittenfrequenz ($f_n$) der Mikrowellenpulse des jeweiligen Sendesignals ($S_n$) abhängige Richtungsabhängigkeit der Abstrahlcharakteristik der Antenne (27) berücksichtigt.

**Claims**

1. Level measuring device (5, 25), operating according to the pulsed radar principle, which is designed to measure a level (L) of a medium in a vessel (1), with

- a transmission unit (11) with a pulse generation unit (15) connected to a controller (13),
-- wherein said transmission unit is designed to generate - according to predefined measuring cycles each comprising at least two measurements - a transmission signal ($S_n$) consisting of microwave pulses of a predefined central frequency ($f_n$) for the respective measurement, wherein the central frequencies ($f_n$) of the trans-

33 **EP 2 901 110 B1** 34

mission signals ($S_n$) of at least two of the measurements are different from one another,
- an antenna (27) connected to the transmission unit (11),

-- wherein said antenna transmits transmission signals ($S_n$) into the vessel (1), and receives the signal parts reflected back in the vessel in the direction of the antenna as reception signals ($R_n$) after a transit time (t) that depends on the distance of the corresponding reflector from the level measuring device (5, 25),
-- wherein said antenna has a spatial radiation characteristic that is different for various central frequencies ($f_n$) and depends on the central frequency ($f_n$) of the transmission signals ($S_n$), and
-- wherein said antenna is a slotted waveguide antenna, which is designed in such a way that the radiation characteristic has two dominant main lobes, whose spatial orientation depends on the central frequency ($f_n$) of the transmitted transmission signal ($S_n$) and is different for different central frequencies ($f_n$), and whose transmission directions to the two sides of the surface normal (Z), which extends on the waveguide wall (37) of the antenna into the vessel in the direction of the medium, each extend under the same angle to the surface normal (Z) which depends on the central frequency, and

- a signal processing unit (19) connected to the transmission unit (11) and the antenna (27),
-- wherein said signal processing unit receives the reception signals ($R_n$) and evaluates them on the basis of the central frequencies ($f_n$) of the microwave pulses of the associated transmission signals ($S_n$) and the central frequency dependence of the spatial radiation characteristic of the antenna.

2. Level measuring device as claimed in Claim 1, wherein
the antenna (27) is a slotted waveguide antenna with a rod-shaped rectangular waveguide (29),

- wherein said antenna has an input (33) which is fed by the transmission unit (11),
- wherein the antenna's end (35) situated opposite the input (33) is open, and
- wherein the antenna has a waveguide wall (37) which is provided with recesses (39), particularly recesses in the form of slots, slot-like recesses or fractal recesses, via which the antenna (27) transmits the transmission signals ($S_n$) with a

spatial radiation characteristic that depends on the positioning and dimensioning of the recesses (39) and the central frequencies ($f_n$) of the transmission signals ($S_n$) supplied, and which is different for various central frequencies ($f_n$).

3. Level measuring device as claimed in Claim 2, wherein the antenna (27) comprises a bundling unit to concentrate the transmission signals ($S_n$) emitted from the antenna (27), particularly

- a funnel-shaped or rectangular waveguide segment (41), arranged on the outside of the waveguide wall (37) and surrounding all the recesses (39),
- a lens arranged on the outside of the waveguide wall (37), particularly a dielectric lens (43) or a magnetic lens,
- plates fitted on the outside on the recesses (39) consisting of one or more planar layers, or
- other rectangular waveguides that are identical to the rectangular waveguide (29) which are connected to form, together with the rectangular waveguide (29), a group of rectangular waveguides, which are fed in parallel with identical phase and amplitude, arranged parallel to one another and perpendicular to the longitudinal axis of the rectangular waveguide (29) and directly beside one another.

4. Level measuring device as claimed in Claim 2, wherein

- the recesses (39) are positioned and sized in such a way that the radiation characteristic of the antenna (27), whose end (35) is short-circuited or open, has two main transmission lobes which are symmetrical to the surface normal (Z) and extend on the waveguide wall (37), and
- an angle ($\beta_n$) at which the main transmission lobes form in relation to the surface normal (Z) on the waveguide wall (37) varies with the central frequency ($f_n$) of the transmission signals ($S_n$).

5. Procedure designed to measure a level of a medium in a vessel (1) using a level measuring device as claimed in Claim 4, operating according to the pulsed radar principle, with an antenna (27)) with a rectangular waveguide (29) open or short-circuited at an end, in applications in which the medium (21) forms a medium surface in a transmission plane of the antenna (27), said surface being essentially symmetrical to the surface normal (Z) and extending on the rectangular waveguide (29), wherein in said procedure

18

- measurements with transmission signals ($S_n$) of different central frequencies ($f_n$) are performed in a measuring cycle, during said measurements

-- a transmission signal ($S_n$) is transmitted with microwave pulses of a central frequency ($f_n$) predefined for the measurement,
-- the associated reception signal ($R_n$) is received, and
-- a measurement curve ($A^n(t)$) is derived on the basis of the reception signal ($R_n$), said curve representing the amplitude (A) of the respective reception signal ($R_n$) as a function of the corresponding signal transit time (t),

- the transit time ($t_n$) of the maximum ($E^nL$) contained in each curve and traced back to a reflection at the surface of the medium is determined for each measurement curve ($A^n(t)$) and
- on the basis of these transit times ($t_n$), the central frequencies ($f_n$) of the associated transmission signals ($S_n$) and the angles ($\beta'_n$) which the main transmission lobes form at the central frequency ($f_n$) with the surface normal (Z), levels ($L_n$) of the medium (32) located in the vessel (1) are determined in distances ($x_n$) from the surface normal (Z) perpendicular to the surface normal (Z), which are determined on the basis of the transit times ($t_n$) and the associated angles ($\beta'_n$).

6. Procedure as claimed in Claim 5, wherein a profile is derived, particularly by interpolation, filtering or smoothing, on the basis of measuring points defined by the fill heights ($L_{n+1,n}$; $L_n$) and the associated distances ($X_{n+1,n}$ ; $X_n$) at which they occur, said profile representing the level (L(x)) as a function of the distance (x).

7. Procedure as claimed in Claim 6, wherein the profile is analyzed for the presence of dips or jumps in the level as a function of the level (L(x)) as a function of the distance (x).

8. Procedure as claimed in Claim 5, wherein the amplitudes (A) of the measurement curves ($A_n(t)$) are subject to a normalization, which takes into account a directional dependence of the radiation characteristic of the antenna (27) as a function of the central frequency ($f_n$) of the microwave pulses of the respective transmission signal ($S_n$).

**Revendications**

1. Transmetteur de niveau (5, 25) fonctionnant selon le principe du radar pulsé, lequel transmetteur est destiné à la mesure d'un niveau (L) d'un produit dans un réservoir (1), avec

- un dispositif d'émission (11) avec un dispositif de génération d'impulsions (15) raccordé à un système de commande (13),
-- lequel dispositif d'émission est conçu de telle sorte à générer - selon des cycles de mesure prédéterminés comprenant chacun au moins deux mesures - pour chaque mesure un signal d'émission ($S_n$) constitué d'impulsions de micro-ondes d'une fréquence centrale ($f_n$) prédéfinie pour la mesure respective, les fréquences centrales ($f_n$) des signaux d'émission ($S_n$) d'au moins deux des mesures étant différentes l'une de l'autre,
- une antenne (27) raccordée au dispositif d'émission (11),

-- laquelle antenne émet les signaux d'émission ($S_n$) dans le réservoir (1), et reçoit en tant que signaux de réception ($R_n$) les parts de signal réfléchies dans le réservoir (1) après un temps de propagation (t) dépendant de la distance du réflecteur correspondant par rapport au transmetteur de niveau (5, 25),
-- laquelle antenne présente une caractéristique de rayonnement spatiale différente pour diverses fréquences centrale ($f_n$), laquelle caractéristique dépend de la fréquence centrale ($f_n$) des signaux d'émission ($S_n$), et
-- laquelle antenne est une antenne à guide d'ondes à fente, laquelle antenne est conçue de telle manière que la caractéristique de rayonnement présente deux lobes principaux dominants, dont l'orientation spatiale dépend de la fréquence centrale ($f_n$) du signal d'émission ($S_n$) respectivement émis et est différente pour diverses fréquences centrales ($f_n$), et dont les directions d'émission des deux côtés de la normale de surface (Z), qui s'étend sur la paroi de guide d'ondes (37) de l'antenne dans le réservoir en direction du produit, s'étendent chacune sous le même angle dépendant de la fréquence centrale par rapport à la normale de surface (Z), et

- un dispositif de traitement de signal (19) raccordé au dispositif d'émission (11) et à l'antenne (27),
-- lequel dispositif de traitement de signal reçoit les signaux de réception ($R_n$) et les évalue sur la base des fréquences centrales ($f_n$) des impulsions de micro-ondes des signaux d'émission

($S_n$) correspondants et de la dépendance aux fréquences centrales de la caractéristique de rayonnement spatiale de l'antenne.

2. Transmetteur de niveau selon la revendication 1, pour lequel l'antenne (27) est une antenne à guide d'ondes à fente avec un guide d'ondes rectangulaire (29) en forme de tige,

   - laquelle antenne présente une entrée (33) alimentée par le dispositif d'émission (11),
   - antenne dont l'extrémité (35) située à l'opposé de l'entrée (33) est ouverte, et
   - laquelle antenne présente une paroi de guide d'ondes (37) pourvue d'évidements (39), notamment d'évidements en forme de fentes, analogues à une fente ou en forme de fractales, par l'intermédiaire desquels l'antenne (27) transmet les signaux d'émission ($S_n$) avec une caractéristique de rayonnement spatiale qui dépend du positionnement et du dimensionnement des évidements (39) et des fréquences centrales ($f_n$) des signaux d'émission ($S_n$) injectés, et qui est différente pour diverses fréquences centrales ($f_n$).

3. Transmetteur de niveau selon la revendication 2, pour lequel l'antenne (27) comprend un dispositif de focalisation destiné à focaliser les signaux d'émission ($S_n$) sortant de l'antenne (27), notamment

   - un segment de guide d'ondes (41) en forme d'entonnoir ou rectangulaire, disposé à l'extérieur de la paroi de guide d'ondes (37) et renfermant tous les évidements (39),
   - une lentille disposée extérieurement sur la paroi de guide d'ondes (37), notamment une lentille diélectrique (43) ou une lentille magnétique,
   - des plaques d'une ou plusieurs couches planes d'un matériau diélectrique, appliquées à l'extérieur sur les évidements (39), ou
   - d'autres guides d'ondes rectangulaires identiques au guide d'ondes rectangulaire (29) et alimentés par celui-ci pour former un groupe de guides d'ondes rectangulaires parallèles, équivalents en amplitude et en phase, qui sont reliés entre eux parallèlement les uns aux autres et perpendiculairement à l'axe longitudinal du guide d'ondes rectangulaire (29), les guides d'ondes rectangulaires étant disposés directement les uns à côté des autres.

4. Transmetteur de niveau selon la revendication 2, pour lequel

   - les évidements (39) sont positionnés et dimensionnés de telle sorte que la caractéristique de rayonnement de l'antenne (27), lorsque l'extrémité (35) de l'antenne est court-circuitée ou ouverte, présente deux lobes de rayonnement principaux symétriques par rapport à la normale de surface (Z) et s'étendant sur la paroi de guide d'ondes (37), et
   - un angle ($\beta_n$), sous lequel les lobes de rayonnement principaux se forment par rapport la normale de surface (Z) sur la paroi de guide d'ondes (37), varie avec la fréquence centrale ($f_n$) des signaux d'émission ($S_n$).

5. Procédé destiné à la mesure d'un niveau d'un produit dans un réservoir (1) au moyen d'un transmetteur de niveau selon la revendication 4, fonctionnant d'après le principe du radar pulsé, avec une antenne (27)) avec un guide d'ondes rectangulaire (29) ouvert à l'extrémité ou court-circuité, dans des applications dans lesquelles le produit (21) forme une surface de produit dans un plan d'émission de l'antenne (27), laquelle surface est pour l'essentiel symétrique à la normale de surface (Z) et s'étendant sur le guide d'ondes rectangulaire (29), procédé pour lequel

   - des mesures avec des signaux d'émission ($S_n$) de différentes fréquences centrales ($f_n$) sont effectuées en un seul cycle de mesure, mesures pour lesquelles

     -- une impulsion de micro-ondes d'un signal d'émission ($S_n$) présentant une fréquence centrale ($f_n$) prédéfinie est émise pour la mesure respective,
     -- dont le signal de réception ($R_n$) correspondant est reçu, et
     -- une courbe de mesure ($A^n(t)$) est dérivée du signal de réception ($R_n$), laquelle courbe représente l'amplitude (A) du signal de réception ($R_n$) respectif en fonction du temps de propagation de signal (t) correspondant,

   - pour chaque courbe de mesure ($A^n(t)$), on détermine le temps de propagation ($t_n$) du maximum ($E^n_L$) qui y est contenu en raison d'une réflexion sur la surface du produit, et
   - sur la base de ces temps de propagation ($t_n$), des fréquences centrales ($f_n$) des signaux d'émission ($S_n$) associés et des angles ($\beta'_n$), que les lobes de rayonnement principaux formant à la fréquence centrale ($f_n$) respective enferment avec la normale de surface (Z), les hauteurs de remplissage ($L_n$) du produit (32) se trouvant dans le réservoir (1) sont déterminées à des distances ($x_n$) de la normale de surface (Z) perpendiculaire à la normale de surface (Z), par le biais des temps de propagation ($t_n$) et des angles ($\beta'_n$) associés respectifs.

**6.** Procédé selon la revendication 5, pour lequel un profil est dérivé, notamment par interpolation, filtrage ou lissage, à partir des points de mesure définis par les hauteurs de remplissage ($L_{n+1,n}$ ; $L_n$) et les distances ($X_{n+1,n}$ ; $X_n$) associées respectives, auxquelles elles se produisent, lequel profil représente la hauteur de remplissage ($L(x)$) en fonction de la distance ($x$).

**7.** Procédé selon la revendication 6, pour lequel le profil est analysé par rapport à la présence de coudes ou de sauts de la hauteur de remplissage ($L(x)$) en fonction de la distance ($x$).

**8.** Procédé selon la revendication 5, pour lequel les amplitudes ($A$) des courbes de mesure ($A_n(t)$) sont soumises à une normalisation, qui tient compte d'une dépendance directionnelle de la caractéristique de rayonnement de l'antenne (27) en fonction de la fréquence centrale ($f_n$) des impulsions de micro-ondes du signal d'émission ($S_n$) respectif.

Fig. 1

EP 2 901 110 B1

Fig. 2

EP 2 901 110 B1

Fig. 3a

Fig. 3b

$$\Delta_{21}(t) = K_2 A^2(t) - A^1(t)$$

Fig. 3c

Fig. 4

Fig. 5

EP 2 901 110 B1

29

35

z

$\beta_n$

$S_n$

y

x

39

37

33

Fig. 6

31

27

41

39

Fig. 7

43

29

Fig. 8

Fig. 9

Fig. 10

EP 2 901 110 B1

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2128576 A1

**In der Beschreibung aufgeführte Nicht-Patentliteratur**

- **AUTOREN A.J. FARRALL ; P.R. YOUNG.** Integrated waveguide slot antennas. *ELECTRONICS LETTERS,* August 2004, vol. 40 (16